(19) Europäisches Patentamt
European Patent Office
Office européen des brevets

(11) **EP 2 826 092 B1**

(12) **EUROPEAN PATENT SPECIFICATION**

(45) Date of publication and mention
of the grant of the patent:
**28.10.2015 Bulletin 2015/44**

(21) Application number: **13718656.5**

(22) Date of filing: **12.03.2013**

(51) Int Cl.:
*H01M 8/02* *(2006.01)*          *H01M 8/10* *(2006.01)*

(86) International application number:
**PCT/JP2013/057577**

(87) International publication number:
**WO 2013/137471 (19.09.2013 Gazette 2013/38)**

(54) **FUEL CELL**

**BRENNSTOFFZELLE**

**PILE À COMBUSTIBLE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.03.2012   JP 2012058616**
**08.05.2012   JP 2012106443**

(43) Date of publication of application:
**21.01.2015   Bulletin 2015/04**

(73) Proprietor: **Nissan Motor Co., Ltd.**
**Yokohama-shi**
**Kanagawa 221-0023 (JP)**

(72) Inventors:
• **IRITSUKI, Keita**
**Atsugi-shi**
**Kanagawa 243-0123 (JP)**
• **FUKUYAMA, Yosuke**
**Atsugi-shi**
**Kanagawa 243-0123 (JP)**

(74) Representative: **Hoefer & Partner Patentanwälte
mbB**
**Pilgersheimer Straße 20**
**81543 München (DE)**

(56) References cited:
**JP-A- 2000 315 507          US-A1- 2003 162 076
US-A1- 2005 227 132          US-A1- 2007 087 235
US-A1- 2011 244 369          US-A1- 2012 028 139**

## Description

### Technical Field

The present invention relates to a fuel cell.

### Background Art

A fuel cell has a stack body formed by stacking a large number of single cells. The stack body is fastened and the surface pressure is applied thereto. A membrane electrode assembly (MEA) included in each single cell is relatively weak in strength, and aligning ribs located on both sides of the membrane electrode assembly prevents damage due to displacement of the ribs. However, the region (non-contact surface) which is not supported by the ribs has low surface pressure (uneven surface pressure occurs), and the low surface pressure causes a problem of increased electrical resistance.

For this reason, the surface pressure is made even by a structure in which the contact surface of a rib on at least one side is present at any part of the MEA by shifting the ribs on the two sides from each other in position, and by enlarging the width of contact surfaces of the ribs (see Patent Document 1). In some cases, the surface pressure is made even by disposing a reinforcing material to improve rigidity (see Patent Document 2).

### Citation List

### Patent Literature

PLT 1: Japanese Patent Application Laid-Open (JP-A) No. 2000-315507
PLT 2: JP-A No. 2006-310104

### Summary of Invention

### Technical Problem

However, the enlarged contact surface width causes a problem of decreasing the size of the non-contact surface decreases, and thereby reducing gas diffusion properties through the non-contact surface.

In addition, the disposition of the reinforcing material causes a problem: the thickness of the single cell increases; and thus the fuel cell becomes larger in size. On the other hand, when an increase in the thickness of the single cell is suppressed by reducing the thickness of the reinforcing material, the evenness of the surface pressure is limited.

The present invention has been made to solve the above-mentioned problems associated with the prior art. It is an object of the present invention to provide a fuel cell that is easily downsized, has good gas diffusion properties, and can make a surface pressure even.

### Solution to Problem

The present invention for achieving the above-mentioned objective is a fuel cell including: a membrane electrode assembly having a polymer electrolyte membrane and catalyst layers disposed therein; an anode separator disposed on an anode side of the membrane electrode assembly; a cathode separator disposed on a cathode side of the membrane electrode assembly; multiple first ribs disposed in parallel with each other in a gas passage space between the membrane electrode assembly and the anode separator; multiple second ribs disposed in parallel with each other in a gas passage space between the membrane electrode assembly and the cathode separator; and a support made of a metal porous base material and disposed between the membrane electrode assembly and at least either of the first ribs and the second ribs. The contact surfaces of the first ribs and the contact surfaces of the second ribs in contact with the membrane electrode assembly or the support are offset from each other in a cross sectional view in the direction orthogonal to the gas passage direction.

### Brief Description of Drawings

[Fig. 1] Fig. 1 is an exploded perspective view for describing a fuel cell according to a first embodiment.

[Fig. 2] Fig. 2 is a cross-sectional view for describing a cell structure according to the first embodiment.

[Fig. 3] Fig. 3 is a plan view for describing the support shown in Fig. 2.

[Fig. 4] Fig. 4 is a cross-sectional view for describing a fuel cell according to a second embodiment.

[Fig. 5] Fig. 5 is a plan view for describing the ribs shown in Fig. 4.

[Fig. 6] Fig. 6 is a cross-sectional view for describing a fuel cell according to a third embodiment.

[Fig. 7] Fig. 7 is a cross-sectional view for describing a fuel cell according to a fourth embodiment.

[Fig. 8] Fig. 8 is a cross-sectional view for describing a schematic structure of a fuel cell according to a fifth embodiment.

[Fig. 9] Fig. 9 is a cross-sectional explanatory view showing the fuel cell according to the fifth embodiment.

[Fig. 10] Fig. 10 is an explanatory view showing a two-ends supporting beam in general mechanics of materials.

[Fig. 11] Fig: 11 is a graph showing the relationship between the position in a projection width direction and the surface pressure.

[Fig. 12] Fig. 12 is a graph showing the relationship between the projection pitch and the bending strength required for the support.

[Fig. 13] Fig. 13 is an explanatory view showing an experimental apparatus used for structural analysis.

[Fig. 14] Fig. 14 is a cross-sectional explanatory view showing another example of the fifth embodiment.

[Fig. 15] Fig. 15 is a cross-sectional explanatory view showing another example of the fifth embodiment.

[Fig. 16] Figs. 16 (A) and 16 (B) each are plan views showing the arrangement of the projections of the fuel cell shown in Fig. 15.

[Fig. 17] Fig. 17 is a cross-sectional explanatory view showing another example of the fifth embodiment.

[Fig. 18] Figs. 18 (A) and 18 (B) each are plan views showing the arrangement of the projections of the fuel cell shown in Fig. 17.

[Fig. 19] Fig. 19 is a cross-sectional explanatory view showing yet another example of the fifth embodiment.

[Fig. 20] Fig. 20 is a plan view showing still another example of the fifth embodiment.

## Description of Embodiments

Hereinafter, the embodiments of the present invention will be described with reference to the drawings.

<First Embodiment>

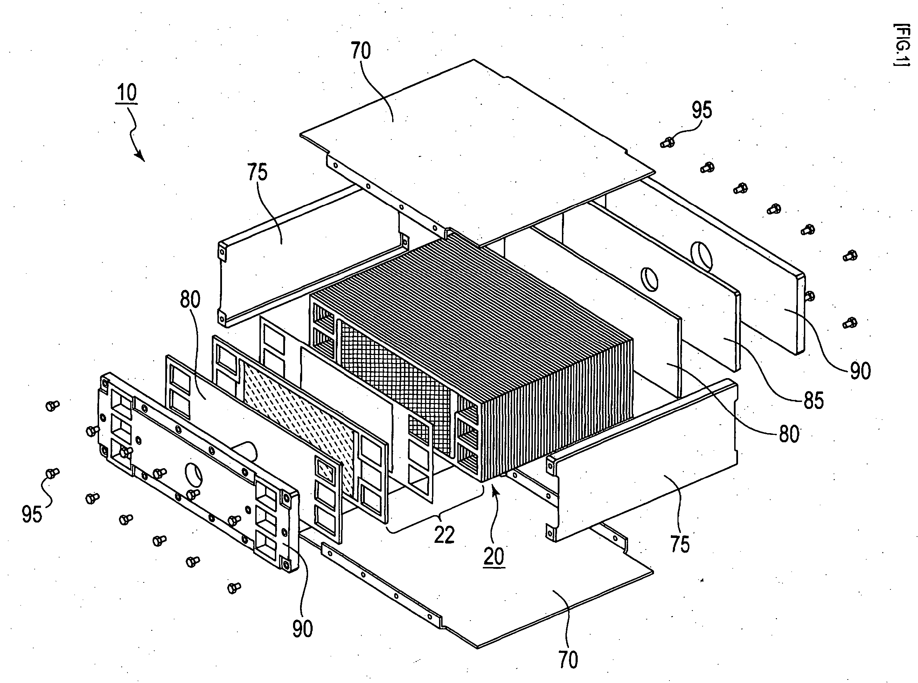

Fig. 1 is an exploded perspective view for describing a fuel cell according to a first embodiment.

A fuel cell 10 according to the first embodiment is easily downsized and has good gas diffusion properties, and enables its surface pressure to be evenly distributed. For example, it is formed from a polymer electrolyte fuel cell using hydrogen as fuel, and is utilized as a power supply. For the polymer electrolyte fuel cell (PEFC), downsizing, densification, and an increased power are possible. It is preferably applied as a power supply for driving mobile objects such as a vehicle having a limited mount space, particularly preferably applied to automobiles in which the system frequently starts and stops, or the output frequently changes. In this case, the PEFC can be mounted under the seats at the center of the car body, in the lower part of the rear trunk room, and in the engine room in the vehicle front portion in automobiles (fuel-cell vehicles), for example. It is preferably mounted under the seats from a viewpoint that a large interior space and trunk room are secured in the car.

As shown in Fig. 1, the fuel cell 10 has a stack part 20, fastener plates 70, reinforcing plates 75, current collectors 80, a spacer 85, end plates 90, and bolts 95.

The stack part 20 includes a stack body of single cells 22. The single cell 22 has a membrane electrode assembly, separators, ribs, and supports, as describe below.

The fastener plates 70 are disposed on a bottom surface and an upper surface of the stack part 20, and the reinforcing plates 75 are disposed on both sides of the stack part 20. That is to say, the fastener plates 70 and the reinforcing plates 75 jointly constitute a casing surrounding the stack part 20.

The current collectors 80 are formed from conductive members with gas impermeability, such as a dense carbon and a copper plate. They are provided with an output terminal for outputting an electromotive force generated in the stack part 20, and disposed at both ends of the stack of the single cells 22 in the stacking direction (at the front and the back of the stack part 20).

The spacer 85 is disposed outside of the current collector 80 disposed at the back of the stack part 20.

The end plates 90 are formed of a material with rigidity, for example, a metallic material such as steel, and disposed outside the current collector 80 disposed at the front of the stack part 20 and outside the spacer 85. The end plates 90 have a fuel gas inlet, a fuel gas outlet, an oxidant gas inlet, an oxidant gas outlet, a cooling water inlet, and a cooling water outlet in order to supply or discharge fuel gas (hydrogen), oxidant gas (oxygen), and a coolant (cooling water) to circulate through the stack part 20.

The bolts 95 are used to keep the internally located stack part 20 in a pressed state by: fastening the end plates 90, the fastener plates 70, and the reinforcing plates 75 together; and making a fastening force exerted in the stacking direction of the single cells 22. The number of bolts 95 and the positions of bolt holes can be appropriately changed. In addition, the fastening mechanism is not limited to threaded fasteners, and other means are also applicable.

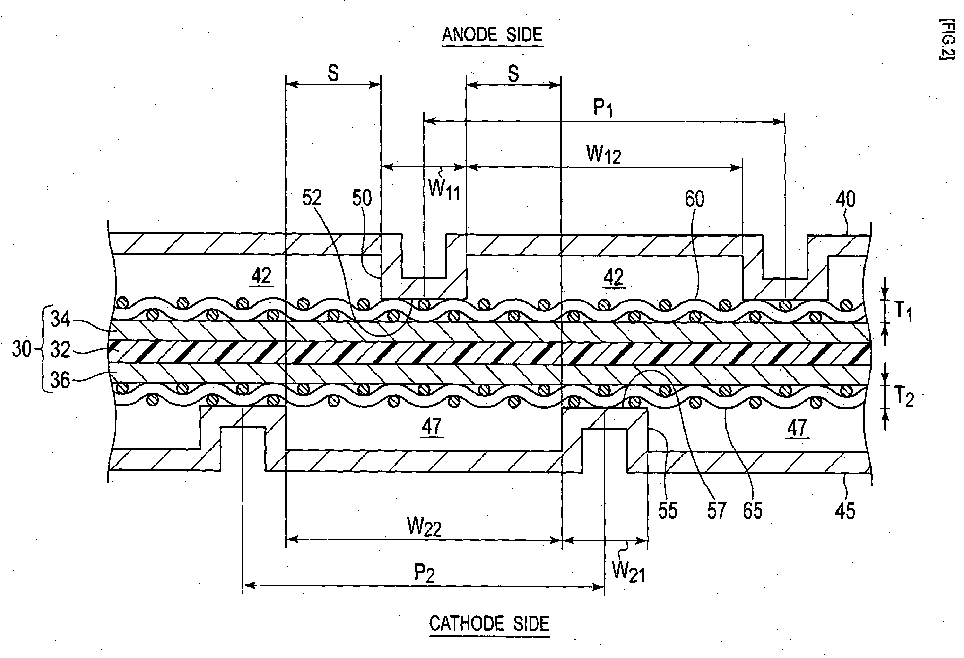

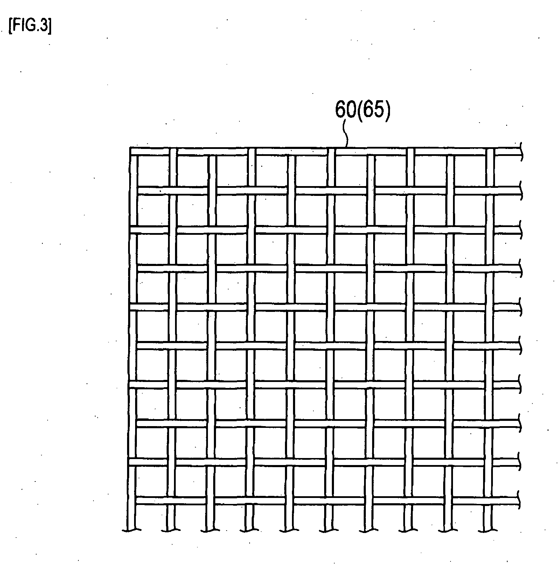

Fig. 2 is a cross-sectional view for describing a cell structure according to the first embodiment, and Fig. 3 is a plan view for describing the supports shown in Fig. 2.

Each single cell 22 has a membrane electrode assembly 30, separators 40 and 45, multiple ribs 50 and 55, and supports 60 and 65.

The membrane electrode assembly 30 has a polymer electrolyte membrane 32 and catalyst layers 34 and 36, as shown in Fig. 2.

The catalyst layer 34 includes a catalytic component, a conductive catalyst carrier for carrying the catalytic component, and a polymer electrolyte. The catalyst layer 34 is an anode catalyst layer in which the hydrogen oxidation reaction proceeds, and is disposed on one side of the polymer electrolyte membrane 32. The catalyst layer 36 includes a catalytic component, a conductive catalyst carrier for carrying the catalytic component, and a polymer electrolyte. The catalyst layer 36 is a cathode catalyst layer in which the oxygen reduction reaction proceeds, and is disposed on the other side of the polymer electrolyte membrane 32.

The polymer electrolyte membrane 32 has a function to allow protons generated in the catalyst layer (anode catalyst layer) 34 to selectively permeate into the catalyst layer (cathode catalyst layer) 36, and a function as a partition to prevent mixture of the fuel gas supplied to the anode side and the oxidant gas supplied to the cathode side.

The separators 40 and 45 have a function to electrically connect the single cells in series and a function as a partition to separate the fuel gas, the oxidant gas, and the coolant from each other. The separators 40 and 45 have substantially the same shape as the membrane electrode assembly 30 and are formed by pressing a stainless steel plate. The stainless steel plate is preferable in terms of ease of complex machining and good conductivity, and it can be also subjected to corrosion-resistant coating if necessary.

The separator 40 is an anode separator disposed on the anode side of the membrane electrode assembly 30, and is facing opposite to the catalyst layer 34. The separator 45 is a cathode separator disposed on the cathode side of the membrane electrode assembly 30, and is facing opposite to the catalyst layer 36. The separators 40 and 45 have multiple manifolds for circulating the fuel gas, the oxidant gas, and the coolant. The manifolds respectively communicate with the fuel gas inlet, the fuel gas outlet, the oxidant gas inlet, the oxidant gas outlet, the cooling water inlet, and the cooling water outlet provided in the end plates 90.

The ribs 50 and 55 formed from protrusions having a rectangular cross-section, which are parts of separators 40 and 45. To put it specifically, the ribs 50 and 55 and the separators 40 and 45 are simultaneously formed (integrally formed) by pressing the stainless steel plates. The ribs 50 are first ribs disposed in parallel with each other and extending in an extending direction (gas passage direction) of the gas passage space 42 defined between the membrane electrode assembly 30 and the separator 40 in the extending direction. The gas passage space 42 is utilized to supply the fuel gas to the catalyst layer 34. The ribs 55 are second ribs disposed in parallel with each other and extending in the extending direction (gas passage direction) of the gas passage space 47 defined between the membrane electrode assembly 30 and the separator 45 in the extending direction (gas passage direction). The gas passage space 47 is utilized to supply the oxidant gas to the catalyst layer 36.

The supports 60 and 65 are conductive plate-shaped members which have bending rigidity and bending strength larger than those of the membrane electrode assembly 30, and are made of porous base materials to supply gases to the catalyst layers.

The supports 60 and 65 are made of metal nets (metal meshes), as shown in Fig. 3. The support 60 is disposed between the catalyst layer 34 and the ribs 50. The support 65 is disposed between the catalyst layer 36 and the ribs 55.

Contact surfaces 52 of the ribs 50 and contact surfaces 57 of the ribs 55 are offset from each other in a cross sectional view in the direction orthogonal to the gas passage direction. Contact surfaces 52 of the ribs 50 and contact surfaces 57 of the ribs 55 are positioned at predetermined intervals in the direction orthogonal to the gas passage direction and the stacking direction of the single cells 22 (so as not to overlap with each other in a projection in the stacking direction), with the support 60, the membrane electrode assembly 30 and the support 65 interposed in between. Contact surfaces 52 and 57 are alternately arranged in the direction orthogonal to the gas passage direction and the stacking direction. This arrangement provides a bending moment to the support 60, the membrane electrode assembly 30 and the support 65, so that: compressive force acts near the contact surfaces (load points) 52 and 57; surface pressure is evenly distributed over the entire surface of a power-generating area, as compared to the case where the contact surfaces 52 and the contact surfaces 57 overlap each other (where the contact surfaces 52 are arranged to be opposite to the contact surfaces 57, respectively). Because the rigidity and the strength are increased by the presence of the supports 60 and 65, damage of the membrane electrode assembly 30 due to the generation of the bending moment is suppressed. In addition, because the widths $W_{11}$ and $W_{21}$ of the contact surfaces 52 and 57 need not to be enlarged, it is possible to avoid a problem of reduced gas diffusion properties through the regions (non-contact surfaces) which are supported by none of the ribs 50 and 55. Further, because the surface pressure is not evenly distributed by only the support 60 or the support 65 (only the rigidity thereof), thicknesses $T_1$ and $T_2$ of the supports 60 and 65 can be made thinner. In short, a fuel cell which is easily downsized and has good gas diffusion properties, and enables the surface pressure to be evenly distributed can be provided. In this case, the ribs 50 and 55 have a rectangular cross-section, and thus the widths $W_{11}$ and $W_{21}$ (contact surface widths) of the contact surfaces 52 and 57 of the ribs 50 and 55 coincide with the widths (widths of top surfaces) of the ribs 50 and 55, respectively. Further, non-contact surface widths $W_{12}$ and $W_{22}$ are defined by the distance between the contact surfaces 52 and 57.

The supports 60 and 65 have bending rigidity larger than that of the membrane electrode assembly 30 and the bending rigidity as a whole is improved so that: the compressive forces exerted from the contact surfaces 52 and 57 are also transmitted to the regions around the areas in contact with the contact surfaces 52 and 57; and the surface pressure in the power-generating area is more evenly distributed. The supports 60 and 65 (metal porous base materials) are present on both sides of the membrane electrode assembly 30, and thus electrical conductivity in the in-plane direction inside the single cell is improved. Tenting (passage blockage) can be prevented whichever side of the membrane electrode assembly gas differential pressure is applied to.

The supports 60 and 65 are made of metal so that: the strength of the supports 60 and 65 is easily improved; and rib pitches (distance between the centers of each two adjacent ribs) $P_1$ and $P_2$ of the ribs 50 and 55 can be increased while the strength to withstand a stacking load is maintained.

The thickness $T_1$ of the support 60 is preferably the same as the thickness $T_2$ of the support 65. In this case, the membrane electrode assembly 30 may be located near a bending neutral surface, and thus the bending stress to the membrane electrode assembly 30 is eased.

The rib pitches $P_1$ and $P_2$ are preferably the same. In this case, the amount of relative shift S representing a distance between the contact surfaces 52 of the ribs 50 and the contact surfaces 57 of the ribs 55 is easily set at the maximum. For example, the bending moment is maximized by shifting the contact surfaces 52 of the ribs 50 and the contact surfaces 57 of the ribs 55 from each other by the distance corresponding to simply a half of the rib pitch, and the surface pressure unevenness can be reduced by uniformly disposing bending-moment-generating parts.

The rib pitches $P_1$ and $P_2$ are preferably equal to or less than the value calculated from the formula (2 × (the length of the supports 60 and 65 in the gas passage width direction) × (the thickness of the supports 60 and 65)$^2$ × (the bending strength of the supports 60 and 65))/ (the stacking load for each of the ribs 50 and 55). In this case, passage occupancy (area occupancy of the gas passage space) increases and therefore the gas diffusion properties can be improved.

The ribs 50 and 55 are preferably disposed such that the amount of relative shift S representing a distance between the contact surfaces 52 of the ribs 50 and contact surfaces 57 of the ribs 55 is the maximum. In this case, the bending moment is maximized and the bending-moment-generating parts are uniformly disposed, thereby reducing surface pressure unevenness.

The supports 60 and 65 are in direct contact with the catalyst layers 34 and 36, and the ribs 50 and 55 are integrated with the separators 40 and 45 so that the electric conduction between the catalyst layers 34 and 36 and the separators 40 and 45 is sufficiently secured to keep the electrical resistance of the single cell low. Therefore, the sufficient gas diffusion properties and the sufficient electrical conductivity are secured, and thus the omission of a gas diffusion layer (GDL) such as a carbon paper achieves a thinner fuel cell. It should be noted that the supports 60 and 65 can also include a gas diffusion layer if necessary.

Next, the materials, the size, and others of each component member will be described in detail.

For the polymer electrolyte membrane 32, a fluorine polymer electrolyte membrane made of perfluorocarbon sulfonic acid polymer, a hydrocarbon resin film having a sulfonic acid group, and a porous membrane impregnated with an electrolyte component such as phosphoric acid and ionic liquid can be applied. Examples of the perfluorocarbon sulfonic acid polymer include Nafion (registered trademark, produced by E. I. du Pont de Nemours and Company), Aciplex (registered trademark, produced by Asahi Kasei Corporation), and Flemion (registered trademark, produced by ASAHI GLASS CO., LTD.). The porous membrane is formed of polytetrafluoroethylene (PTFE) and polyvinylidene fluoride (PVDF).

Although the thickness of the polymer electrolyte membrane 32 is not particularly limited, the thickness is preferably 5 to 300 $\mu$m, more preferably 10 to 200 $\mu$m in view of the strength, the durability, and the output characteristics.

The catalytic component used in the catalyst layer (cathode catalyst layer) 36 is not particularly limited as long as having catalysis for the oxygen reduction reaction. The catalytic component used in the catalyst layer (anode catalyst layer) 34 is not particularly limited as long as having catalysis for the hydrogen oxidation reaction.

The catalytic component is specifically selected from, for example, metals such as platinum, ruthenium, iridium, rhodium, palladium, osmium, tungsten, lead, iron, chromium, cobalt, nickel, manganese, vanadium, molybdenum, gallium, and aluminum, their alloys, and others. The catalytic component preferably includes at least platinum in order to improve the catalytic activity, the poisoning resistance to carbon monoxide, the thermal resistance, and others. The catalytic component applied to the cathode catalyst layer and the catalytic component applied to the anode catalyst layer are not necessarily the same, and can be appropriately selected.

A conductive carrier for a catalyst used in the catalyst layers 34 and 36 is not particularly limited as long as having a specific surface area to carry the catalytic component in a desired dispersed state and sufficient electron conductivity as a current collector. However, the conductive carrier is preferably composed mainly of carbon particles. The carbon particles include, for example, carbon black, activated carbon, corks, natural graphite, and artificial graphite.

The polymer electrolyte used in the catalyst layers 34 and 36 is not particularly limited as long as being a member having at least high proton conductivity. For example, a fluorine electrolyte with fluorine atoms in all or a part of polymer backbones and a hydrocarbon electrolyte without fluorine atoms in polymer backbones are applicable. The polymer electrolyte used in the catalyst layers 34 and 36 may be the same as or different from that used in the polymer electrolyte membrane 32. They are preferably the same in view of improved adhesion of the catalyst layers 34 and 36 to the polymer electrolyte membrane 32.

The separators 40 and 45 are not limited to the form made of stainless steel plates. Metal materials (for example, an aluminum plate and a clad material) other than a stainless steel plate, and carbon such as a dense carbon graphite and a carbon plate, are also applicable. When carbon is applied, the ribs 50 and 55 can be formed by, for example, cutting or screen printing.

The contact surface widths $W_{11}$ and $W_{21}$ of more than 300 $\mu$m make it difficult for the gas supplied from the gas passage spaces 42 and 47 to diffuse into the areas directly under the ribs, thereby increasing gas transport resistance to decrease power generation performance. The contact surface widths $W_{11}$ and $W_{21}$ are preferably 50 to 300 $\mu$m, particularly preferably 100 to 200 $\mu$m with higher power density of the fuel cell taken into consideration.

When the supports 60 and 65 have bending (tensile) strength of 100 MPa or more, they can withstand the stacking load even if the rib pitches $P_1$ and $P_2$ are set at 600 $\mu$m or more. In this case, the passage occupancy increases so that the gas diffusion properties increase.

The non-contact surface widths $W_{12}$ and $W_{22}$ of less than 100 $\mu$m disturb the supply of gases (fuel gas or oxidant gas) in a sufficient amount, and decrease the proportion of the gas passages to the power-generating area, thereby increasing gas transport resistance and decreasing power generation performance. In addition, because the intervals between adjacent ribs are narrowed, precise positioning, fine processing and others are required for the formation of the ribs 50 and 55, and a cost of parts increases. Therefore, the non-contact surface widths $W_{12}$ and $W_{22}$ are preferably 100 to 2000 $\mu$m, and particularly preferably 200 to 1000 $\mu$m.

The conductive material made into the supports 60 and 65 is not particularly limited, and for example, a material which is the same as the component material applied to the separators 40 and 45 can be appropriately used. A material having the surface coated with metal is also applicable, and in this case, a material which is the same as that described above can be used as the metal on the surface, and a core preferably has conductivity. For example, a conductive polymer material and a conductive carbon material can be applied to the core.

The surfaces of the supports 60 and 65 can be also subjected to an anti-corrosion treatment, a water-repellent treatment, and a hydrophilic treatment. The hydrophilic treatment is, for example, the coating with gold or carbon, and can control the corrosion of the supports 60 and 65.

The water-repellent treatment is, for example, the coating with a water repellent. It decreases water residence in openings of the support 60 and 65, inhibits the obstruction of the gas supply and flooding due to water, secures stable supply of the gases to the catalyst layers 34 and 36, suppresses a rapid decrease in the cell voltage, and accordingly stabilizes the cell voltage. Examples of the water repellent include: a fluorine polymer material such as PTFE, PVdF, polyhexafluoropropylene, and tetrafluoroethylene-hexafluoropropylene copolymer (FEP); polypropylene; and polyethylene.

The hydrophilic treatment is, for example, the coating with a hydrophilic agent. Because the hydrophilic treatment draws liquid water from the catalyst layers 34 and 36 to the passage side, the hydrophilic treatment reduces water remaining in the catalyst layers 34 and 36, thereby suppresses a rapid decrease in the cell voltage, and accordingly stabilizes the cell voltage. The hydrophilic agent is, for example, a silane coupling agent or a polyvinyl pyrrolidone (PVP). It is also possible to perform the hydrophilic treatment on the separator-side surfaces of the supports 60 and 65 and the water-repellent treatment on the catalyst layer-side surfaces of the supports 60 and 65.

The number of the meshes in the net forming each of the supports 60 and 65 is preferably 100 or more, more preferably 100 to 500 in view of the gas supply performance and the cell voltage. The wire diameter of the net is preferably 25 to 110 $\mu$m in view of the contact area with which the net is contact with the catalyst layers 34 and 36 and the ribs 50 and 55 (the electrical resistance in the cell). The weave (knit) of the net is not particularly limited, and, for example, plain weave, twill weave, plain dutch weave, and twill dutch weave are also applicable. It is also possible to form the net by fixing (for example, welding) wire rods to each other without weaving.

The supports 60 and 65 are not limited to the form applying the metal net, and for example, a punched metal, an expanded metal, and an etched metal are also applicable.

As described above, in the first embodiment, the contact surfaces 52 of the ribs 50 and the contact surfaces 57 of the ribs 55 are offset from each other in a cross sectional view in the direction orthogonal to the gas passage direction. This arrangement provides a bending moment to the support 60, the membrane electrode assembly 30, and the support 65, so that: compressive force acts near the contact surfaces (load points) 52 and 57; and the surface pressure is evenly distributed over the entire surface of a power-generating area; because the rigidity and the strength are increased by the presence of the supports 60 and 65, damage of the membrane electrode assembly 30 due to the generation of the bending moment is suppressed. In addition, because the widths $W_n$ and $W_{21}$ of the contact surfaces 52 and 57 need not be enlarged, it is possible to avoid a problem of reduced gas diffusion properties through the regions (non-contact surfaces) which are supported by none of the ribs 50 and 55. Further, because the surface pressure is not evenly distributed by only the support 60 nor the support 65 (only the rigidity thereof), thicknesses $T_1$ and $T_2$ of the supports 60 and 65 can be made thinner. In short, the fuel cell which is easily downsized and has good gas diffusion properties, and enables the surface pressure to be evenly distributed can be provided.

The supports 60 and 65 have bending rigidity larger than that of the membrane electrode assembly 30 and the bending rigidity as a whole is improved so that; the compressive forces exerted from the contact surfaces 52 and 57 are also transmitted to the regions around the areas in contact with the contact surfaces 52 and 57; and the surface pressure in the power-generating area is more evenly distributed. The supports 60 and 65 (metal porous base materials) are present on both sides of the membrane electrode assembly 30, and thus the electrical conductivity in the in-plane direction inside the single cells is improved. Tenting (passage blockage) can be prevented whichever side of the membrane electrode assembly gas differential pressure is applied to.

The supports 60 and 65 are made of metal so that: the strength of the supports 60 and 65 is easily improved; and the rib pitches (distance between the centers of each two adjacent ribs) $P_1$ and $P_2$ of the ribs 50 and 55 can be increased while maintaining the strength to withstand the stacking load.

The thickness $T_1$ of the support 60 is preferably the same as the thickness $T_2$ of the support 65. In this case, the membrane electrode assembly 30 is located near a bending neutral surface and thus the bending stress to the membrane electrode assembly 30 is eased.

The rib pitches $P_1$ and $P_2$ are preferably the same. In this case, the amount of relative gap S representing a distance between the contact surfaces 52 of the ribs 50 and the contact surfaces 57 of the ribs 55 is easily set at the maximum. For example, the bending moment is maximized by shifting the contact surfaces 52 of the ribs 50 and the contact surfaces 57 of the ribs 55 from each other by the distance corresponding to simply a half of the rib pitch, and the surface pressure unevenness can be reduced by uniformly disposing bending-moment-generating parts.

The rib pitches $P_1$ and $P_2$ are preferably equal to or less than (2 × (the length of the supports 60 and 65 in the gas passage width direction) × (the thickness of the supports 60 and 65)$^2$ × (the bending strength of the supports 60 and 65)) / (the stacking load for each of the ribs 50 and 55). In this case, the passage occupancy increases and therefore the gas diffusion properties can be improved.

The ribs 50 and 55 are preferably disposed such that the amount of relative gap S representing the distance between the contact surfaces 52 of the ribs 50 and the contact surfaces 57 of the ribs 55 is the maximum. In this case, the bending moment is maximized, the bending-moment-generating parts are uniformly disposed, and thereby the surface pressure unevenness is reduced.

<Second Embodiment>

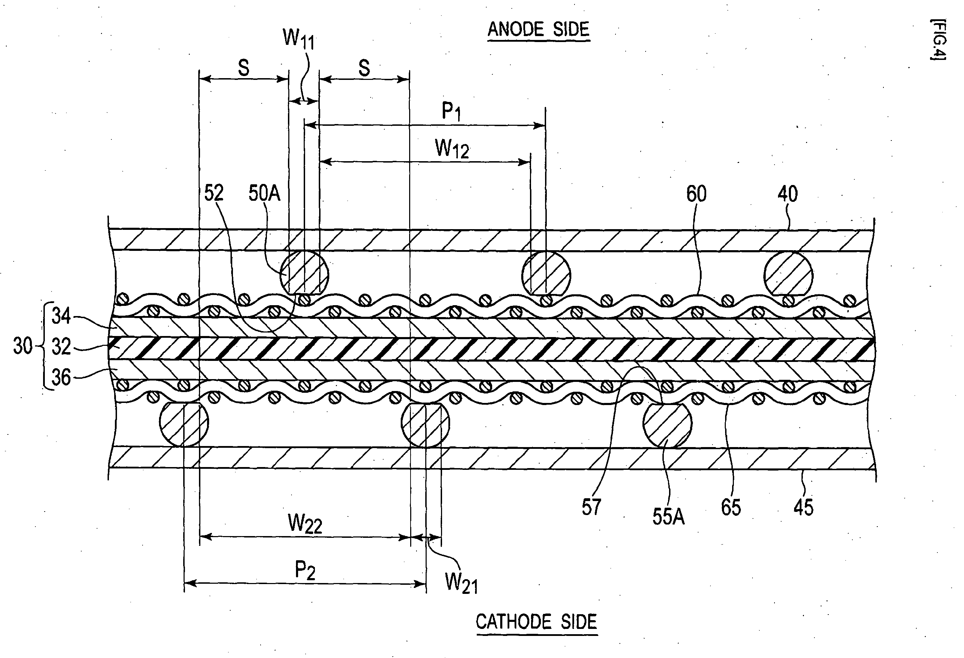

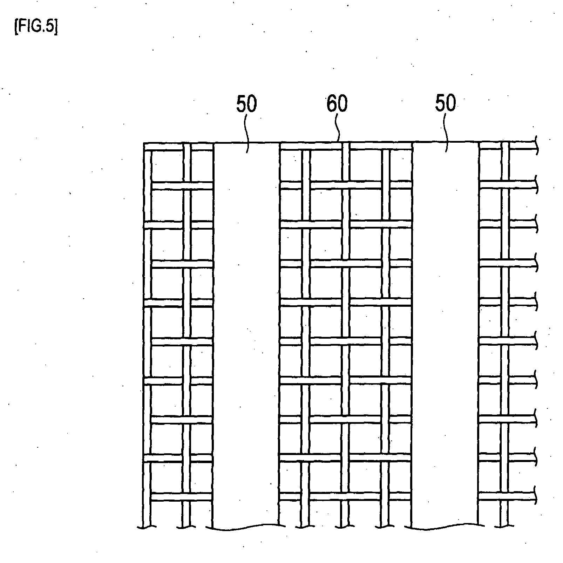

Fig. 4 is a cross-sectional view for describing a fuel cell according to a second embodiment, and Fig. 5 is a plan view for describing the rib shown in Fig. 4.

The fuel cell according to the second embodiment generally differs from the fuel cell according to the first embodiment in that the fuel cell according to the second embodiment has ribs 50A and 55A which are separate bodies which are not integrally formed with separators 40 and 45. Hereinafter, the members having the same function as those in the first embodiment are denoted by the same reference signs, and descriptions for such members are omitted to avoid overlapping.

The ribs 50A and 55A are made from a wire rod having a circular cross-section and fixed to the support 60 and 65. Accordingly, even if the ribs 50A and 55A are not straight in shape, the bending rigidity of the supports 60 and 65 in both in-plane length and width directions can be improved because the contact points between the ribs 50A and 55A and the supports 60 and 65 are fixed. In this case, since the ribs 50A and 55A have the circular cross-section, the widths $W_{11}$ and $W_{21}$ of contact surfaces 52 and 57 (contact surface widths) of the ribs 50A and 55A are smaller than the widths (diameters) of the ribs 50A and 55A.

The method for fixing the ribs 50A and 55A to the support 60 and 65 is not particularly limited, and mechanical fixation and thermal bonding are applicable. The mechanical fixation includes, for example, the fixation by fitting and the fixation with a wire.

The fixation by fitting can be carried out by fitting projections (or recesses) formed on the ribs 50A and 55A to recesses (or projections) formed on the supports 60 and 65. The fixation with a wire can be carried out by inserting wires provided at the ribs 50A and 55A into openings formed in the supports 60 and 65, or by fastening the ribs 50A and 55A with wires passing through openings formed in the support 60 and 65.

The thermal bonding includes, for example, welding, sintering, and deposition. The thermal bonding is advantageous because: the electrical conductivity is secured even if a site without the surface pressure applied thereto or a non-contact site is present in the supports 60 and 65 and the ribs 50A and 55A; and operation is easy.

The conductive material composing the ribs 50A and 55A is not particularly limited, and for example, a material which is the same as the component material applied to the supports 60 and 65 can be appropriately used. It is also possible to apply a material having the surface coated with metal or to perform the anti-corrosion treatment, the water-repellent treatment, and the hydrophilic treatment on the surface of the material.

As described above, in the second embodiment, the bending rigidity of supports 60 and 65 can be improved because the ribs 50A and 55A are fixed to the supports 60 and 65.

The cross-sectional shape of the ribs 50A and 55A is not limited to a circle, and for example, an ellipse (rugby ball-shaped, disc-shaped), a rectangle, a triangle, and a polygon are applicable.

The ribs 50A and 55A may be disposed as they are without being fixed to the tops of the supports 60 and 65, or integrally formed with the supports 60 and 65, if necessary. In addition, the ribs 50A and 55A also may be fixed to the separators 40 and 45. Further, the ribs 50A and 55A also may be formed by directly transferring the ribs 50A and 55A made of conductive carbon materials to the separators 40 and 45 through screen printing or others.

<Third Embodiment>

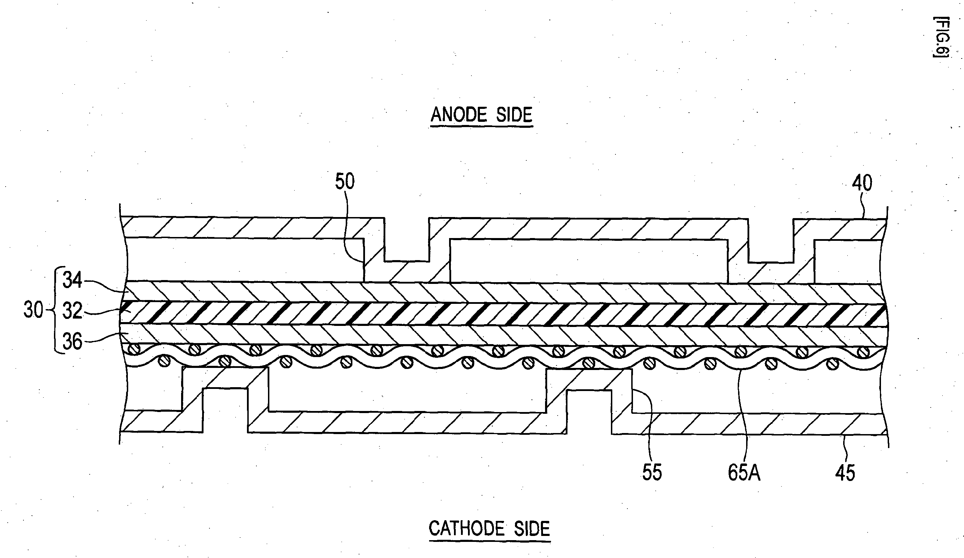

Fig. 6 is a cross-sectional view for describing a fuel cell according to a third embodiment.

The fuel cell according to the third embodiment generally differs from the fuel cell according to the first embodiment in that the fuel cell according to the third embodiment has a single support 65A.

The support 65A has bending rigidity smaller than that of a membrane electrode assembly 30, and is disposed on the cathode side of the membrane electrode assembly 30, and located between a catalyst layer 36 and a separator 45.

The reason why the bending rigidity of the support 65A is made smaller than that of the membrane electrode assembly 30 is that the support 65A is not present on the anode side of the membrane electrode assembly 30, the smaller bending rigidity results in even surface pressure. The reason why the support 65A is disposed on the cathode side is that the influence of gas diffusion properties is greater on the cathode side. The membrane electrode assembly 30 and the support 65A preferably have the same strength against deflection.

As described above, in the third embodiment, the support 65A is disposed only on the cathode side of the membrane electrode assembly 30 so that the fuel cell is easily downsized. The ribs 50 and 55 also may be separate bodies as in the case of the second embodiment.

<Fourth Embodiment>

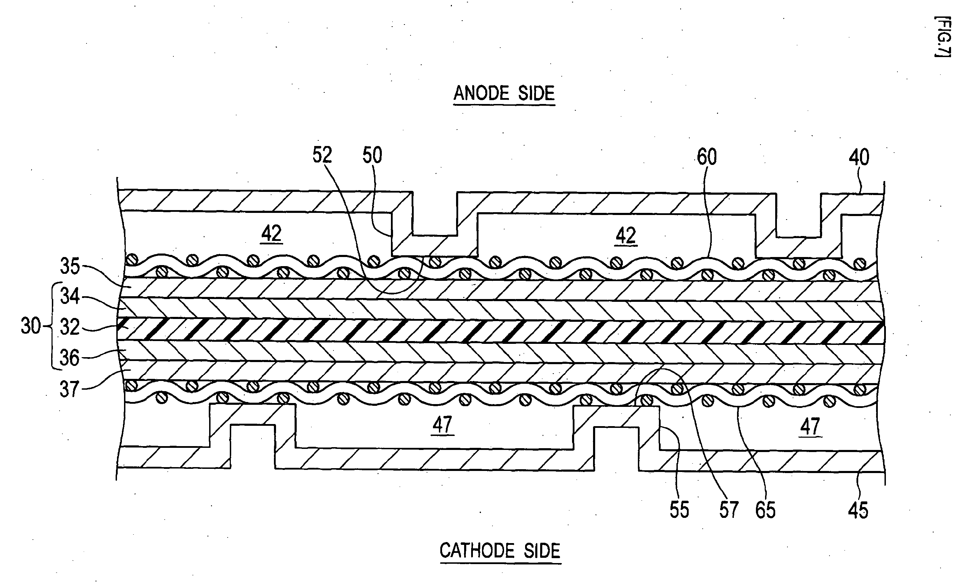

Fig. 7 is a cross-sectional view for describing a fuel cell according to a fourth embodiment.

The fuel cell according to the fourth embodiment generally differs from the fuel cell according to the first embodiment in that the fuel cell according to the fourth embodiment has conductive intermediate layers 35 and 37 disposed between supports 60 and 65 and a membrane electrode assembly 30.

The intermediate layers 35 and 37 are made of micro porous layers (MPL) having sufficient mechanical strength, and can ease stress added to the membrane electrode assembly 30 from the supports 60 and 65. Further, because the intermediate layers 35 and 37 avoid direct contact between the supports 60 and 65 and the membrane electrode assembly 30 and, for example, damage of the membrane electrode assembly 30 due to the stress added from the supports 60 and 65 can be suppressed even when the supports 60 and 65 are made of metal nets.

The micro porous layer is formed from a carbon particle layer made of an aggregate of carbon particles. The carbon particles are not particularly limited, and carbon black, graphite, and expanded graphite are applicable. The carbon black is preferable in terms of excellent electron conductivity and a large specific surface area. The carbon particles preferably has a mean particle size of about 10 to 100 nm, which provides high drainage performance due to capillary force and results in better contact with the catalyst layers 34 and 36.

The carbon particle layer may also contain a water repellent in view of improving the water repellency to prevent a flooding phenomenon and others. In this case, liquid water remaining in openings of the supports 60 and 65 is easily discharged and thus the corrosion resistance of the supports 60 and 65 can be improved.

Examples of the water repellent include: fluorine polymer materials such as PTFE, PVdF, polyhexafluoropropylene, and FEP; polypropylene; and polyethylene. The fluorine polymer material is preferable in terms of excellent water repellency and excellent corrosion resistance during electrode reactions. The mixing ratio of the carbon particles to the water repellent is preferably 90 : 10 to 40 : 60 (carbon particles : water repellent) in a mass ratio with the balance between the water repellency and the electron conductivity taken into consideration.

As described above, in the fourth embodiment, the intermediate layers 35 and 37 for reducing the stress exerted on the membrane electrode assembly 30 from the supports 60 and 65 are present to avoid the direct contact between the supports 60 and 65 and the membrane electrode assembly 30. Accordingly, damage of the membrane electrode assembly 30 due to the stress added from the supports 60 and 65 can be suppressed, for example, even when the supports 60 and 65 are made of metal nets.

The intermediate layers 35 and 37 are not limited to the form made of the micro porous layer, and a gas diffusion layer and a combination of the gas diffusion layer and the micro porous layer are also applicable. In the second and third embodiments, it is also possible to include the intermediate layers 35 and 37.

<Fifth Embodiment>

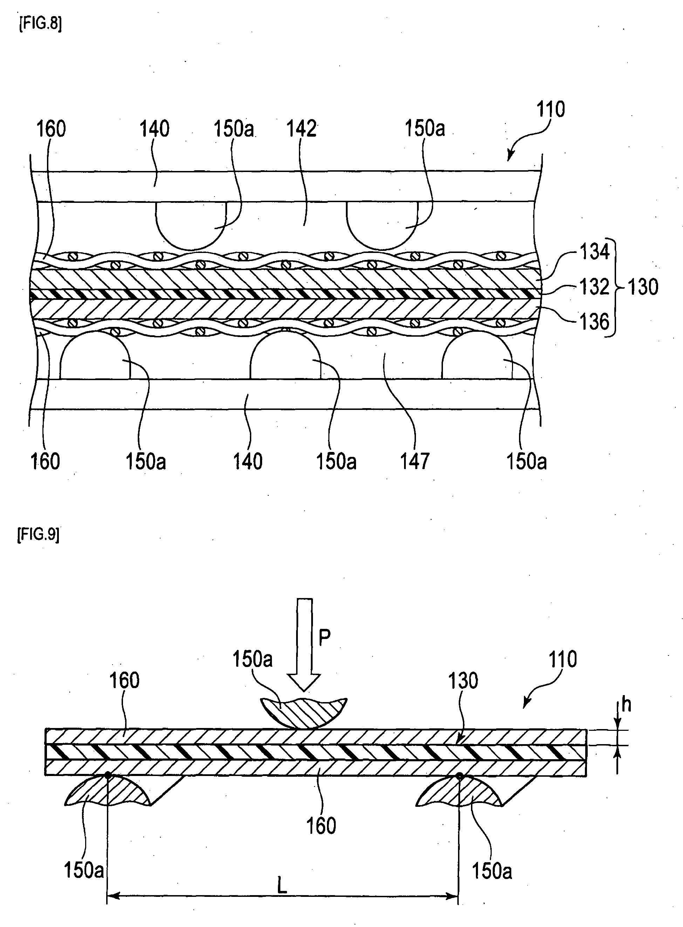

Fig. 8 is a cross-sectional view for describing a schematic structure of a fuel cell according to a fifth embodiment, and Fig. 9 is a cross-sectional explanatory view showing the fuel cell according to the fifth embodiment.

The fuel cell 110 shown in Fig. 8 includes: a membrane electrode assembly 130 having a structure in which a polymer electrolyte membrane 132 is held between a pair of catalyst layers 134 and 136; separators 140 and 140 for defining gas passage spaces 142 and 147 between the membrane electrode assembly 130 and the separators 140 and 140; and supports 160 and 160 made of conductive porous base materials and disposed on the surfaces of the catalyst layers 134 and 136, respectively.

In the fuel cell 110, both separators 140 and 140 have multiple projections 150a having curved surfaces in tops in contact with the membrane electrode assembly 130, and arranged at predetermined intervals at which the projections 150a in one of the separators 140 are evenly offset to the projections 150a in the other separator 140.

In the fuel cell 110, as shown in Fig. 9, the relationship among the mean surface pressure P from one separator 140 side indicated by the arrow in the figure, the pitch (distance between the centers) L between the adjacent projections 150a and 150a in the other separator 140, the thickness h of the supports 160, and the bending strength $\sigma$ of the supports 160 satisfies

$$L \leq (2h^2\sigma/P)^{0.5}.$$

The membrane electrode assembly 130 is generally referred to as MEA (Membrane Electrode Assembly), in which the polymer electrolyte membrane 132 made of a solid polymer membrane is held between a pair of catalyst layers, specifically an anode side catalyst layer 134 and a cathode side catalyst layer 136 although a detailed illustration is omitted. The catalyst layers 134 and 136 have a structure in which an adequate number of gas diffusion layers are stacked in addition to the catalyst layer.

The separator 140 is, for example, made of stainless steel and has multiple projections 150a formed at least on the surface opposite to the membrane electrode assembly 130. The projections 150a having the curved surfaces in tops are shaped like (formed in a shape of) ribs extending in parallel with each other. Accordingly, the projections 150a are in line contact with the membrane electrode assembly 130. In the separator 140, a groove portion between the adjacent projections 150a and 150a serves as a gas passage space 142 for an anode gas (a hydrogen-containing gas) or a gas passage space 147 for a cathode gas (an oxygen-containing gas, air).

The supports 160 are conductive porous base materials and made of metal, and more desirably they are rolled or thermally treated. The supports 160 are formed of any of a metal net, an etched stainless steel sheet, a punched metal, an expanded metal, and a metallic nonwoven fabric, and formed from a metal net in the illustrated example. Further, the identical members are used for both of the catalyst layers 134 and 136 on the supports 160.

In the fuel cell 110, the separators 140 and 140 have the same pitch L between the adjacent projections 150a, and the amount of offset between any one projection 150a in one separator 140 and the corresponding projection 150a in the other separator 140 is a half of the pitch L between each adjacent two projections 150a on each of the separators 140. In other words, the projection 150a in one upper separator 140 on the upper side is located at the center (middle position) of two adjacent projections 150a and 150a in the other lower separator 140 on the lower side, as shown in Figs. 8 and 9. Moreover, the projections 150a in the separators 140 more desirably have a width of 3 mm or more.

In the fuel cell 110, although illustration is omitted, a gas seal is appropriately applied to the peripheral parts located between the membrane electrode assembly 130 and each of the separators 140 and 140, so that the anode gas and the cathode gas are circulated in the gas passage spaces 142 and 147 respectively, through a supply passage and an exhaust passage.

The multiple fuel cells 110 having the above-mentioned structure are stacked to compose a fuel cell stack. In the fuel cell stack in this case, a predetermined surface pressure is applied to each of the fuel cells 110 by disposing end plates and the like at both ends of the fuel cell stack and then pressing the fuel cell stack in the stacking direction, thereby absorbing their displacement due to the swelling of the membrane electrode assembly 130 and others, and maintaining the gas sealing properties.

Considering that the above-mentioned fuel cell 110 includes the supports 160 on the surfaces of the catalyst layers 134 and 136 and the projections 150a in one of the separators 140 are offset to the projections 150a in the other separator, the relationship among the mean surface pressure P, the pitch L between the projections 150a, the thickness h of the supports 160, and the bending strength σ of the supports 160 is set. Accordingly, in the structure where the projections 150a of the separators 140 and 140 at both sides with the membrane electrode assembly 130 interposed in between are arranged offset to each other, evenly distributed surface pressure acting on the membrane electrode assembly 130 can be realized while maintaining good gas diffusion properties of the catalyst layers 134 and 136.

In general, for example, when projections of both separators are aligned with each other in the thickness direction of the fuel cell 110, it is clear that only the parts between the projections on both sides receive higher surface pressure in a membrane electrode assembly. Further, although offset arrangement of projections on both sides suppresses a local increase in the surface pressure, force to deform a membrane electrode assembly into a wave form works. Thus, for example, it is necessary to make a pitch between projections smaller or to enlarge the width of projections at least on one side like in conventional fuel cells. Accordingly, gas diffusion properties decrease at the parts in contact with projections in a catalyst layer.

On the other hand, the above-mentioned fuel cell 110 is brought into the state where the membrane electrode assembly 130 is reinforced by each of the supports 160, so that even though the projections 150a are offset with the pitch L between the projections 150a made larger, or with the width of the projections 150a made smaller, the surface pressure acting on the membrane electrode assembly 130 can be evenly distributed. In addition, for the fuel cell 110, the relationship among the mean surface pressure P, the pitch L between the projections 150a, the thickness h of the supports 160, and the bending strength σ of the supports 160 is set as described above, thereby achieving a structure based on the offset arrangement of the projections 150a to fully exert the effect of the offset arrangement of the projections 150a.

In the above-mentioned fuel cell 110, the amount of offset between the projections 150a on both sides is a half of the pitch L between the projections 150a, and both of the separators 140 have the same pitch L between the adjacent projections 150a. Accordingly, the bending load distribution in the membrane electrode assembly 130 in the in-plane direction can be made even.

In addition, the above-mentioned supports 160 are made of metal in the fuel cell 110 so that: the bending strength of the supports 160 itself is improved; and the pitch L between the projections 150a can be enlarged. Further, in the fuel cell 110, the use of the supports 160 which are rolled or thermally treated improves the bending strength of the supports 160 itself and thus the pitch L between the projections 150a can be enlarged. Further, when the supports 160 is formed from any of a metal net, an etched stainless steel sheet, a punched metal, an expanded metal, and a metallic nonwoven fabric in the fuel cell 110, a low cost and improved workability are realized.

Further, in the above-mentioned fuel cell 110, the use of the identical supports 160 in the catalyst layers 134 and 136 allows the bending neutral surface to be located at the center of the membrane electrode assembly 130 and can reduce the bending stress acting on the membrane electrode assembly 130. Further, in the above-mentioned fuel cell 110, the projections 150a having a width of 3 mm or more enable the separators 140 to be easily manufactured by pressing or the like and contribute to a low cost and others. The projections 150a having a width of less than 3 mm may require micro processing and increase a manufacturing cost.

In the above-mentioned fuel cell 110, the structure in which the relationship among the mean surface pressure P from the one separator 140 side, the pitch L between the adjacent projections 150a and 150a in the other separator 140, the thickness h of the supports 160, and the bending strength σ of the supports 160 satisfies

$$L \leq (2h^2\sigma/P)^{0.5}$$

is not simply led by general mechanics of materials.

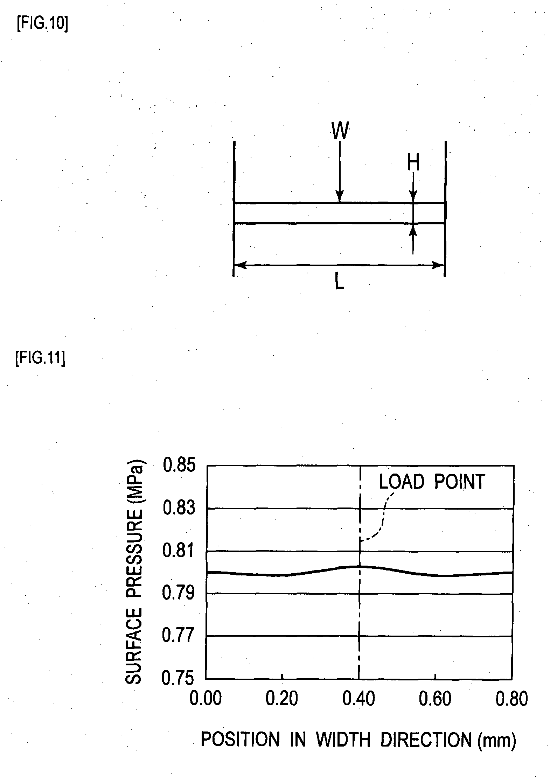

As shown in Fig. 10, when considering that offset arrangement of a projection is a two-end supported beam, the maximum bending moment M and the maximum stress σ are obtained by Equations 1 and 2 as given below. That is to say, when a support has bending strength of more than the maximum stress σ, then a structure can be formed. In Equations 1 and 2, W stands for a load; h for the thickness of a support; H for the thickness of a beam; L for a pitch between projections; P for a mean surface pressure; a for the width of a power-generating region in a membrane electrode assembly; b for the length of the power-generating region; y for a distance from a neutral surface (h as the center between two supports); and I for the second moment of the cross section ($I = 2bh^3/3$).

$$M = WL/8 \qquad \text{(Equation 1)}$$

$$\sigma = My/I = 3WL/16bh^2 = 3PL^2/16h^2 \qquad \text{(Equation 2)}$$

However, it was found that Equation 2 was not applicable to the actual fuel cell 110. For example, Equation 2 suggests that when the surface pressure is 1 MPa and the support has the thickness of 50 μm, a structure can be formed with the support having bending strength of 75 MPa. However, when the fuel cell 110 and the fuel cell stack are assembled under such conditions in practice, the support is forced to the plastic region and deformed.

For this reason, the finite element method analysis was carried out with the shape of each element and others in the actual fuel cell 110 taken into consideration, leading to the solution to form an offset arrangement structure of the projections 150a on both sides based on the correlation with an experiment.

Analysis using the model as shown in Fig. 9 revealed that although the load onto the membrane electrode assembly 130 was a single point load from the upper projection 150a, the surface pressure was distributed by each element in the in-plane direction when the surface pressure distribution of the membrane electrode assembly 130 was visualized, as shown in Fig. 11. Because the distribution of the load influences the bending moment, the influence was expressed with a correction term X (Equation 3).

Further, when the stress of the analysis result was visualized, it was found that the supports 160 on both sides independently received the load. In this case, because the influence was exerted as a factor of the shape, the influence was expressed with a correction term Y of the second moment of the cross section, and further coefficient parts were collectively expressed with Z (Equation 4).

Thus, the maximum stress in consideration of the shape can be calculated based on the above analysis result. Then, if a structure of the supports 160 has bending strength sufficient to withstand the maximum stress, the structure can be formed. In view of this, Z was set to express the stress of the analysis result (Equation 4), and the relational expression (Equation 6) of the present embodiment was obtained by modification of Equation 5. Specifically, it was confirmed that, when the mean surface pressure P, the pitch L between the projections 150a, the thickness h of the supports 160, and the bending strength σ of the supports 160 was set to satisfy Equation 5, the requirements for forming the offset arrangement of the projections 150a were met without deformation, indentation and others of the membrane electrode assembly 130 in the experiment.

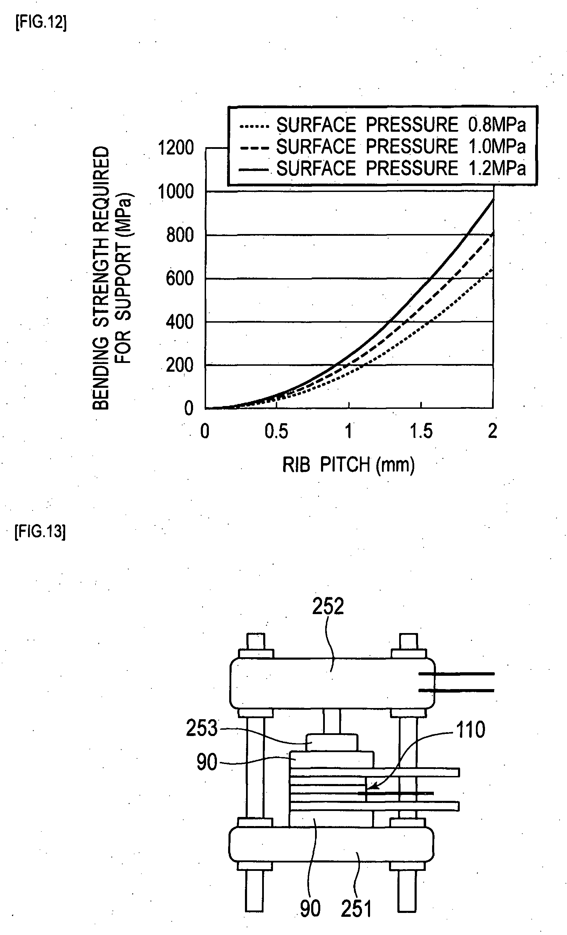

Fig. 12 is a graph showing the relationship of the pitch (rib pitch) between the projections 150a and the bending strength required for the supports 160. It was confirmed that the range exceeding Equation 6 caused the plastic deformation of the membrane electrode assembly 130 due to the projections 150a, whereas the range within Equation 6 did not cause the plastic deformation of the membrane electrode assembly 130.

$$\sigma = 3XPL^2/16h^2 \qquad \text{(Equation 3)}$$

$$\sigma = 3XPL^2/16Yh^2 = ZPL^2/h^2 \qquad \text{(Equation 4)}$$

$$\sigma = PL^2/2h^2 \qquad \text{(Equation 5)}$$

$$L \le (2h^2\sigma/P)^{0.5} \qquad \text{(Equation 6)}$$

Next, in the present embodiment, the above-mentioned analysis and experiment were carried out in order to obtain the relationship among a pitch L, bending strength σ of the supports 160, and a mean surface pressure P for forming the offset arrangement of the projections 150a. In the experiment, Examples 1 to 8 used different compositions of separators 140, supports 160, and electrode (MPL) 2 respectively, as shown in Tables 1 and 2.

[Table 1]

| | Assembly | Separator | | | | | |
|---|---|---|---|---|---|---|---|
| | Surface Pressure | Rib Pitch mm | (Rib Width mm) | Processing Method | Material | Surface Treatment | Passage |
| Example 1 | 0.1, 0.5, 0.7, 1.0, 1.5 | 0.6, 0.9, 1.0, 1.2, 1.5, 1.6, 1.8, 2.0, 2.5 | 0.3 | Cutting | JIS SUS316L | Gold Plating | Straight (Rectangular) |
| Example 2 | 0.1, 0.5, 0.7, 1.0, 1.5 | 0.4, 0.6, 1.2 | 0.2 | Cutting | JIS SUS316 | Gold Plating | Straight (Rectangular) |
| Example 3 | 0.1, 0.5, 0.7, 1.0, 1.5 | 1.4, 1.9, 2.3, 2.7 | 0.7 | Electrical Discharge Machining | JIS SUS304 | Diamond Like Carbon | Straight (Rectangular) |
| Example 4 | 0.3, 0.65, 1.2 | 1.98 | Dot Diameter: 0.5 | Etching | JIS SUS316 | Gold Plating | Circle Dot |
| Example 5 | 0.75 | 1.2, 1.8 | 0.6 | Etching & Cutting | JIS SUS316L | Gold Plating | Straight (Wave Form) |
| Example 6 | 0.75 | 0.4, 0.6, 1.2 | 0.2 | Cutting | JIS SUS316 | Gold Plating | Straight (Rectangular) |
| Example 7 | 0.9 | 1.3 | 0.3 | Pressing | JIS SUS316L | Diamond Like Carbon | Straight (Wave Form) |
| Example 8 | 1 | 1.2 | 0.6 | Cutting | Aluminum | Gold Plating | Straight (Rectangular) |

[Table 2]

| | Support | | | | | | MPL |
|---|---|---|---|---|---|---|---|
| | Bending Strength MPa | Type | Material | Surface Treatment | Aftertreatment | Free Length $\mu$m | Type |
| Example 1 | 300 | Metal Net (Plain Weave, dia. $\phi$ 0.05 mm) | JIS SUS316 | Gold Plating | Rolling, Annealing | 90 | Carbon Black & PTFE, Sheet-Shaped |
| Example 2 | 230 | Metal Net (Plain Weave, dia. $\phi$ 0.1 mm) | JIS SUS316 | Gold Plating | None | 90 | Carbon Black & PTFE, Sheet-Shaped |
| Example 3 | 198 | Etched SUS Sheet | JIS SUS304 | Gold Plating | None | 40 | Carbon Black & PTFE, Sheet-Shaped |
| Example 4 | 170 | Metal Net (Plain Weave, dia. $\phi$ 0.06 mm) | JIS SUS316 | Gold Plating | Rolling | 40 | Carbon Black, Coating Type |

(continued)

|  | | Support | | | MPL | | |
|---|---|---|---|---|---|---|---|
|  | Bending Strength MPa | Type | Material | Surface Treatment | Aftertreatment | Free Length μm | Type |
| Example 5 | 298 | Punched Metal | JIS SUS316L | Diamond Like Carbon | Compression by Press Machine | 70 | Carbon Black & PTFE, Sheet-Shaped |
| Example 6 | 298 | Punched Metal | JIS SUS316L | Gold Plating | Compression by Press Machine | 90 | Carbon Black (Large Particle Size) & PTFE, Sheet-Shaped |
| Example 7 | 300 | Metal Net (Plain Weave, dia. φ 0.05 mm) | JIS SUS316 | Gold Plating | Compression by Press Machine | 90 | Carbon Black & PTFE, Sheet-Shaped |
| Example 8 | 340 | Roll Pressed SUS Sheet | JIS SUS316 | Gold Plating | Compression by Press Machine | 90 | Carbon Black & PTFE, Sheet-Shaped |

The bending strength of the supports 160 can be measured by well-known bending strength tests, and commercially available load testers represented by, for example, Micro Tester Model 5848 produced by Instron and others can be used. In the present embodiment, an experimental apparatus shown in Fig. 13 was used to carry out the experiment with various mean surface pressure.

In the illustrated experimental apparatus, a plunger 253 to be raised and lowered by a gas cylinder 252 is provided above a stage 251; end plates 90 and 90 are disposed on the upper and lower sides of the fuel cell 110; and then the end plates 90 and the fuel cell 110 are set on the stage 251. Subsequently, the plunger 253 is lowered and a load in the thickness direction, i.e. surface pressure is applied to the fuel cell 110. The mean surface pressure was checked by a pressure measurement film Prescale produced by Fujifilm Corporation.

As a result, when the relationship among the pitch L of projections 150a, the bending strength $\sigma$ of the supports 160, and the mean surface pressure P satisfied Equation 6 given above, neither deformation nor deterioration was observed in the supports 160. Meanwhile, when the relationship among the various components did not satisfy Equation 6, plastic deformation was observed in the supports 160. The influence of the deformation of the supports 160 reached the membrane electrode assembly 130 as well, and specifically the influence was detected as a short circuit between the catalyst layers 134 and 136, and as an increase in the amount of cross leakage. This can be confirmed by the linear sweep voltammetry using an electrochemical diagnostic device. In this case, the measurement was carried out by: supplying hydrogen to the anode side; and supplying nitrogen to the cathode side.

In the present embodiment, the verification was made while checking the consistency with the experimental results by carrying out not only the experiment but also structural analysis with the finite element method.

A structure in which the projections 150a on one side were offset to the projection 150a on the other side as shown in Fig. 9 was modeled as a two-end supported beam, and grid generation was carried out with a polyhedral mesh. The distance between the projections 150a on the one side was considered as a beam length, and the mean surface pressure was considered as an input load. The finite element method solver in IDEAS was used as a solver. However, other solvers such as ANSYS and ABAQUS may be used.

The distance between the projections 150a enabling the structure to be maintained without the supports 160 going into the region of plastic deformation when the bending strength of the supports 160 and the mean surface pressure are specified are calculated from the above-mentioned analysis results. Because these are in the relationship of the bending strength $\sigma$ of supports 160, the thickness h of supports 160, the mean surface pressure P, and the pitch L between projections 150a, it can be understood that it is the bending strength of the supports 160 required when a certain mean surface pressure is applied with a certain distance between the projections 150a. Specifically, it can be expressed with the relational expression (see Equation 6 given above) of the present embodiment, and the surface pressure sensitivity is as shown in Fig. 12 described above.

Thus, the relational expression for the fuel cell 110 of the present embodiment was not easily obtained simply from a part of mechanics of materials. Instead, the relational expression is characteristic of the fuel cells, which is obtained by: carrying out the analysis and experiment with each element of the fuel cell taken into consideration; and deriving the relational expression on the basis of the results of the analysis and the experiment.

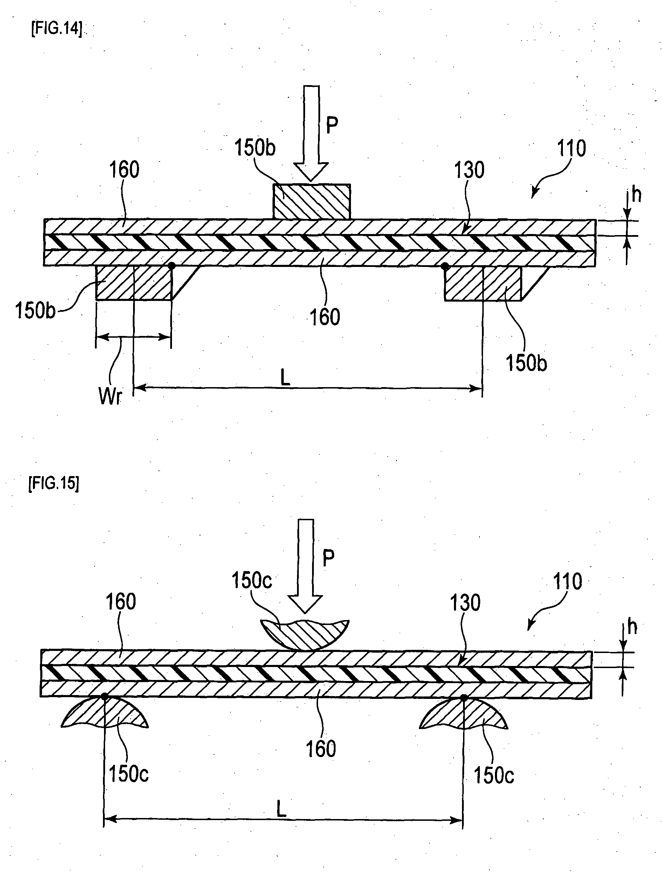

Figs. 14 to 20 are views for explaining other examples of the fuel cell of the present embodiment. Component parts which are the same as those in the above embodiments are denoted by the same reference signs, and their detailed description is omitted. In each of the following embodiments, the analysis and the experiment were also carried out as in the case of the above embodiment, and each relational expression was obtained based on the results.

A fuel cell 110 shown in Fig. 14 includes a membrane electrode assembly 130, separators (whose bodies are not shown) on both sides, and supports 160 and 160. Both of the separators have multiple projections 150b having flat surfaces in tops in contact with the membrane electrode assembly 130, and arranged at predetermined intervals at which the projections 150b on one side are evenly offset to the projections 150b on the other side. The projections 150b are formed in a shape of rib as in the case of the above embodiment. Accordingly, the projections 150b are in surface contact with the membrane electrode assembly 130.

In the fuel cell 110, the relationship among a mean surface pressure P from one separator side, a pitch L between adjacent projections 150b in the other separator, a width Wr of the projections 150b, a thickness h of the supports 160, and bending strength $\sigma$ of the supports 160 satisfies

$$L - Wr \le (2h^2\sigma/P)^{0.5}.$$

Even in the above-mentioned fuel cell 110, the structure based on the offset arrangement of the projections 150b can be achieved to fully exert the effect of the offset arrangement of the projections 150b, and even surface pressure can be realized while maintaining good gas diffusion properties of catalyst layers 134 and 136.

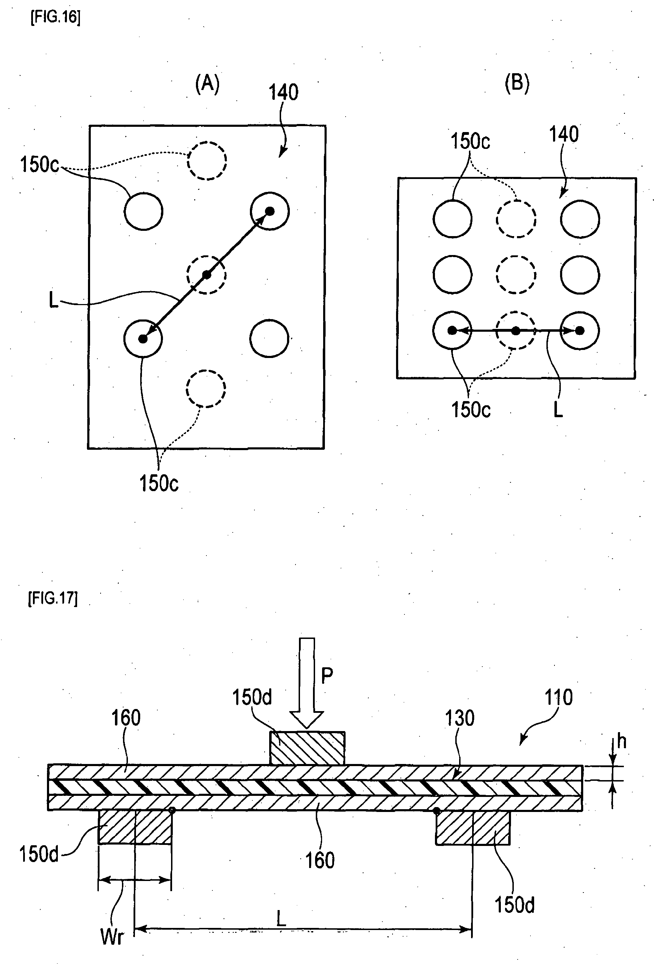

A fuel cell 110 shown in Fig. 15 includes a membrane electrode assembly 130, separators (whose bodies are not shown) on both sides, and supports 160 and 160. Both of separators have multiple projections 150c having curved surfaces in tops in contact with the membrane electrode assembly 130, and arranged at predetermined intervals at which the projections 150c on one side are evenly offset to the projections 150c on the other side. The projections 150c are shaped like (formed in a shape of) a circle dot. Accordingly, the projections 150c are in point contact with the membrane electrode assembly 130. These projections 150c are regularly disposed as shown in Figs. 16 (A) and 16 (B). In Fig. 16, dotted lines indicate the projections 150c in one separator, and solid lines indicate the projections 150c in the other separator.

In the fuel cell 110, as in the case of the structure shown in Fig. 9, the relationship among a mean surface pressure P from one separator side, a pitch L between adjacent projections 150c in the other separator, a thickness h of the supports 160, and bending strength $\sigma$ of the supports 160 satisfies

$$L \le (2h^2\sigma/P)^{0.5}.$$

Even in the above-mentioned fuel cell 110, the structure based on the offset arrangement of the projections 150c can be achieved to fully exert the effect of the offset arrangement of the projections 150c, and even surface pressure can be realized while maintaining good gas diffusion properties of catalyst layers 134 and 136.

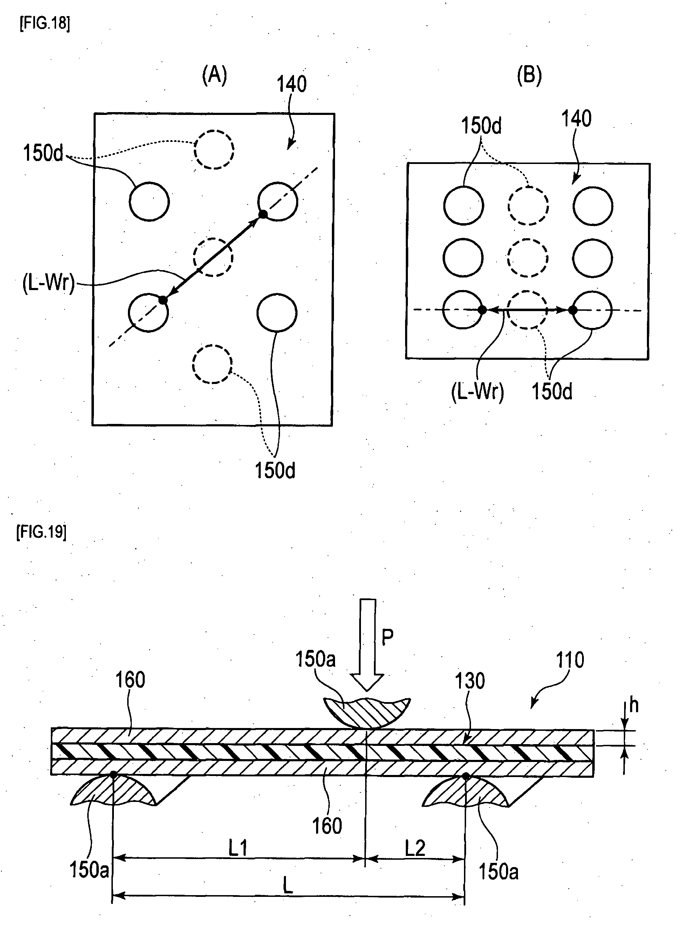

A fuel cell 110 shown in Fig. 17 includes a membrane electrode assembly 130, separators (bodies are not shown) on both sides, and supports 160 and 160. Both of separators have multiple projections 150d having flat surfaces in tops in contact with the membrane electrode assembly 130, and arranged at predetermined intervals at which the projections 150d on one side are evenly offset to the projections 150d on the other side. The projections 150d are shaped like (formed in a shape of) a circle dot. Accordingly, the projections 150d are in surface contact with the membrane electrode assembly 130. These projections 150d are regularly disposed as shown in Figs. 18 (A) and 18 (B). In Fig. 18, as in Fig. 16, dotted lines indicate the projections 150d in one separator, and solid lines indicate the projections 150d in the other separator.

In the fuel cell 110, as in the case of the structure shown in Fig. 14, the relationship among a mean surface pressure P from one separator side, a pitch L between adjacent projections 150d in the other separator, a width Wr of the projections 150d, a thickness h of the supports 160, and bending strength $\sigma$ of the supports 160 satisfies

$$L - Wr \le (2h^2\sigma/P)^{0.5}.$$

Even in the above-mentioned fuel cell 110, the structure based on the offset arrangement of the projections 150d can be achieved to fully exert the effect of the offset arrangement of the projections 150d, and even surface pressure can be realized while maintaining good gas diffusion properties of catalyst layers 134 and 136.

In a fuel cell 110 shown in Fig. 19, projections on one side are unevenly offset to projections on the other side, while the projections on one side are evenly offset to the projections on the other side in the above embodiments. In brief, the illustrated fuel cell 110 includes a membrane electrode assembly 130, separators (whose bodies are not shown), and supports 160 and 160.

Both of the separators have multiple rib-shaped projections 150a having curved surfaces in tops in contact with the membrane electrode assembly 130, and disposed in parallel with each other at predetermined intervals at which the projections 150a in one of the separators are offset to the projections 150a in the other separator. Specifically, in the figure, the projection 150a in the upper separator is shifted to the right from the center (middle point) of two adjacent projections 150a in the lower separator. Accordingly, an interval $L_1$ between the upper projection 150a and one lower projection in the in-plane direction are larger than an interval $L_2$ between the upper projection 150a and the other lower projection in the in-plane direction.

In the fuel cell 110, the relationship among a mean surface pressure P from one separator side, a pitch L between adjacent projections 150a in the other separator, a thickness h of the supports, and bending strength $\sigma$ of the supports satisfies

$$L \leq (2h^2\sigma/XP)^{0.5},$$

where X is defined as $X = 2L_1/(L_1+L_2)$ in which: $L_1$ is a distance between the projection 150a in one separator and one of the adjacent projections 150a in the other separator and; $L_2$ is a distance between the projection 150a in one separator and the other adjacent projection 150a in the other separator ($L=L_1+L_2$).

Even in the above-mentioned fuel cell 110, the structure based on the offset arrangement of the projections 150a can be achieved to fully exert the effect of the offset arrangement of the projections 150a, and even surface pressure can be realized while maintaining good gas diffusion properties of catalyst layers 134 and 136.

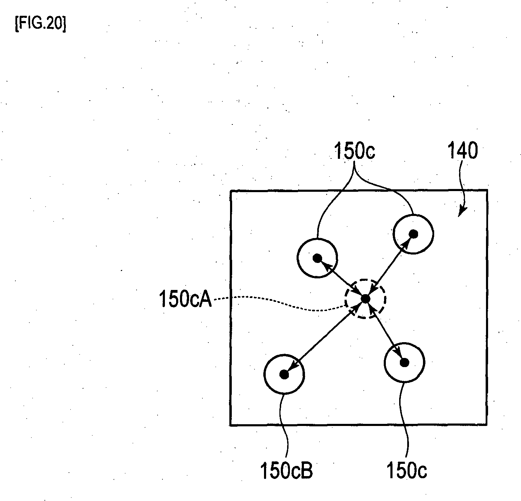

A fuel cell 110 shown in Fig. 20 differs from the fuel cell 110 shown in Fig. 19 in that the fuel cell 110 shown in Fig. 20 has dot-shaped projections 150c while the fuel cell 110 shown in Fig. 19 has rib-shaped projections. In this fuel cell 110, the multiple dot-shaped projections 150c are irregularly disposed, and the projections 150c on one side are offset to the projections 150c on the other side.

In this fuel cell 110, a pitch L between adjacent projections 150c in the other separator is a double of a distance in the in-plane direction between the center of gravity of an arbitrary projection 150cA in one separator and the center of gravity of the furthest projection 150cB among four projections 150c closest to the arbitrary projection 150cA in the other separator.

In the fuel cell 110, the relationship among a mean surface pressure P from one separator side, a pitch L between adjacent projections 150c in the other separator, a thickness h of the supports 160, and bending strength $\sigma$ of the supports 160 satisfies

$$L \leq (2h^2\sigma/XP)^{0.5}.$$

Even in the above-mentioned fuel cell 110, the structure based on the offset arrangement of the projections 150c can be achieved to fully exert the effect of the offset arrangement of the projections 150c, and even surface pressure can be realized while maintaining good gas diffusion properties of the electrode.

The embodiments of the present invention are described above. However, these embodiments are only the illustrations described for making the present invention easily understood, and the present invention is not limited to the embodiments. The technical scope of the present invention includes not only the specific technical matters disclosed in the above-mentioned embodiments but also various modifications, changes, and alternative technologies which may be easily derived therefrom. For example, the fuel cell can be formed from: a solid polymer electrolyte fuel cell using methanol as fuel (for example, a direct methanol fuel cell (DMFC) and a micro fuel cell (passive DMFC)), or can be applied as a stationary power supply. As fuel other than hydrogen or methanol, ethanol, 1-propanol, 2-propanol, primary butanol, secondary butanol, tertiary butanol, dimethyl ether, diethylether, ethylene glycol, diethylene glycol, and others are also applicable. For example, in the fifth embodiment, the materials of each element, and the cross-sectional shape and the planar shape of the projections can be appropriately selected.

This application claims priority to Japanese Patent Application No. 2012-058616 filed on March 15, 2012 and Japanese Patent Application No. 2012-106443 filed on May 8, 2012, which are incorporated herein by reference in its entirety.

**Industrial Applicability**

According to the present invention, damage due to the generation of the bending moment is suppressed since: the contact surfaces of the first ribs and the contact surfaces of the second ribs are offset from each other in the cross sectional view in the direction orthogonal to the gas passage direction; a bending moment is generated so that compressive force acts near the contact surfaces (load points); the surface pressure is evenly distributed over the entire surface of the power-generating area; and the rigidity is increased by the presence of the support. In addition, because the contact surface width needs not be enlarged, it is possible to avoid a problem of reduced gas diffusion properties in the regions (non-contact surfaces) which are supported by none of the first and the second ribs. Further, because the surface pressure is not evenly distributed by only the support (only the rigidity), the thickness of the support can be made thinner. In short, the fuel cell which is easily downsized and has good gas diffusion properties, and enables the surface pressure to be evenly distributed can be provided.

**Reference Signs List**

| | |
|---|---|
| 10, 110 | fuel cell |
| 20 | stack part |
| 22 | single cell |
| 30, 130 | membrane electrode assembly |
| 32, 132 | polymer electrolyte membrane |
| 34, 134 | catalyst layer (anode catalyst layer) |
| 35 | intermediate layer |
| 36, 136 | catalyst layer (cathode catalyst layer) |
| 37 | intermediate layer 37 |
| 40 | anode separator |
| 45 | cathode separator |
| 140 | separator |
| 42, 47, 142, 147 | gas passage space |
| 50, 50A | rib (first rib) |
| 52 | contact surface |
| 55, 55A | rib (second rib) |
| 57 | contact surface |
| 60, 65, 65A, 160 | support |
| 70 | fastener plate |
| 75 | reinforcing plate |
| 80 | current collector |
| 85 | spacer |
| 90 | end plate |
| 95 | bolt |
| $P_1, P_2$ | rib pitch |
| S | amount of relative gap |
| $T_1, T_2$ | thickness |
| $W_{11}, W_{21}$ | contact surface width |
| $W_{12}, W_{22}$ | non-contact surface width |

**Claims**

1.   A fuel cell (10) comprising:

    a membrane electrode assembly (30) having a polymer electrolyte membrane (32) and catalyst layers (34, 36) disposed therein;
    an anode separator (40) disposed on an anode side of the membrane electrode assembly (30);
    a cathode separator (45) disposed on a cathode side of the membrane electrode assembly (30);
    a plurality of first ribs (50, 50A) disposed in parallel with each other in a gas passage space (42) between the membrane electrode assembly (30) and the anode separator (40);

a plurality of second ribs (55, 55A) disposed in parallel with each other in a gas passage space (47) between the membrane electrode assembly (30) and the cathode separator (45); and

a support (60, 65, 65A) made of a metal porous base material and disposed between the membrane electrode assembly (30) and at least either of the first ribs (50, 50A) and the second ribs (55, 55A),

wherein contact surfaces (52) of the first ribs (50, 50A) in contact with the membrane electrode assembly (30) or the support (60, 65, 65A) and contact surfaces (57) of the second ribs (55, 55A) in contact with the membrane electrode assembly (30) or the support (60, 65, 65A) are offset from each other in a cross sectional view in the direction orthogonal to a gas passage direction and positioned without overlapping with each other in a projection in a stacking direction.

2. The fuel cell (10) according to claim 1, wherein
the support (60, 65, 65A) has bending rigidity larger than that of the membrane electrode assembly (30), and
the support (60, 65, 65A) is disposed both between the membrane electrode assembly (30) and the first ribs (50, 50A) and between the membrane electrode assembly (30) and the second ribs (55, 55A)).

3. The fuel cell (10) according to claim 1 or 2, wherein the first ribs (50, 50A) and the second ribs (55, 55A) have the same rib pitch ($P_1$, $P_2$).

4. The fuel cell (10) according to any one of claims 1 to 3, wherein the first ribs (50, 50A) and the second ribs (55, 55A) have a rib pitch ($P_1$, $P_2$) of (2 $\times$ (a length of the support in a gas passage width direction) $\times$ (a thickness of the support)$^2$ $\times$ (bending strength of the support))/ (a stacking load for each of the first ribs and the second ribs) or less but not 0.

5. The fuel cell (10) according to any one of claims 2 to 4, wherein the support (60, 65, 65A) disposed between the anode side of the membrane electrode assembly (30) and the first ribs (50, 50A) has the same thickness as the support (60, 65, 65A) disposed between the cathode side of the membrane electrode assembly (30) and the second ribs (55, 55A).

6. The fuel cell (10) according to claim 3, wherein the first ribs (50, 50A) and the second ribs (55, 55A) are disposed such that the amount of relative gap representing a distance between the contact surfaces (52) of the first ribs (50 50A) and the contact surfaces (57) of the second ribs (55, 55A) is half the rib pitch ($P_1$, $P_2$).

7. The fuel cell (10) according to any one of claims 1 to 6, comprising an intermediate layer (35, 37) disposed between the support (60, 65, 65A) and the membrane electrode assembly (30),
wherein the intermediate layer (35, 37) eases a stress added to the membrane electrode assembly (30) from the support (60, 65, 65A).

8. A fuel cell (110) comprising:

a membrane electrode assembly (130) having a structure in which a polymer electrolyte membrane (132) is held between a pair of catalyst layers (134, 136);
a pair of separators (140) for defining gas passages between the membrane electrode assembly (130) and the separators (140); and
supports (160) made of conductive porous base materials and disposed on surfaces of the catalyst layers (134, 136), respectively,
wherein the pair of separators (140) have a plurality of projections (150a, 150b, 150c, 150d) each having curved surfaces in tops in contact with the membrane electrode assembly (130), and arranged at predetermined intervals at which the projections (150a, 150b, 150c, 150d) in one of the separators (140) are evenly offset to the projections (150a, 150b, 150c, 150d) in the other separator (140), and
the relationship among a mean surface pressure P from one separator side, a pitch L between adjacent projections in the other separator, a thickness h of the supports, and bending strength $\sigma$ of the supports satisfies $L \leq (2h^2\sigma/P)^{0.5}$,

9. A fuel cell (110) comprising:

a membrane electrode assembly (130) having a structure in which a polymer electrolyte membrane (132) is held between a pair of catalyst layers (134, 136);
a pair of separators (140) for defining gas passages between the membrane electrode assembly (130) and the separators (140); and

supports (160) made of conductive porous base materials and disposed on surfaces of the catalyst layers (134, 136), respectively,

wherein the pair of separators (140) have a plurality of projections (150a, 150b, 150c, 150d) having flat surfaces in tops in contact with the membrane electrode assembly (130), the projections (150b) arranged at predetermined intervals at which the projections (150a, 150b, 150c, 150d) of one of the pair of separators (140) are evenly offset to the projections (150a, 150b, 150c, 150d) in the other separator (140), and

the relationship among a mean surface pressure P from one separator side, a pitch L between adjacent projections in the other separator, a width Wr of the projections, a thickness h of the supports, and bending strength $\sigma$ of the supports satisfies $L - Wr \leq (2h^2\sigma/P)^{0.5}$.

10. The fuel cell (110) according to claim 8 or 9, wherein the projections (150a, 150b, 150c, 150d) in the pair of separators (140) are shaped like ribs disposed in parallel to each other.

11. The fuel cell (110) according to claim 8 or 9, wherein the projections (150a, 150b, 150c, 150d) in the pair of separators (140) are shaped like dots.

12. A fuel cell (110) comprising:

a membrane electrode assembly (130) having a structure in which a polymer electrolyte membrane (132) is held between a pair of catalyst layers (134, 136);

a pair of separators (140) for defining gas passages between the membrane electrode assembly (130) and the separators (140); and

supports (160) made of conductive porous base materials and disposed on surfaces of the catalyst layers (134, 136), respectively,

wherein the pair of separators has a plurality of rib-shaped projections (150a) having curved surfaces in tops in contact with the membrane electrode assembly (130), and disposed in parallel with each other at predetermined intervals at which the projections (150a) in one of the pair of separators (140) are offset to the projections (150a) in the other separator (140),

the relationship among a mean surface pressure P from one separator side, a pitch L between adjacent projections in the other separator, a thickness h of the supports, and bending strength $\sigma$ of the supports satisfies $L \leq (2h^2\sigma/XP)^{0.5}$,

where X is defined as $X = 2L_1/(L_1+L_2)$ in which $L_1$ denotes a distance between any one projection in one separator (140) and one of the adjacent projections in the other separator (140) and $L_2$ denotes a distance between the projection in one separator (140) and the other adjacent projection in the other separator (140).

13. A fuel cell (110) comprising:

a membrane electrode assembly (130) having a structure in which a polymer electrolyte membrane (132) is held between a pair of catalyst layers (134, 136);

a pair of separators (140) for defining gas passages between the membrane electrode assembly (130) and the separators (140); and

supports (160) made of conductive porous base materials and disposed on surfaces of the catalyst layers (134, 136), respectively,

wherein the pair of separators (140) have a plurality of dot-shaped projections (150c) having curved surfaces in tops in contact with the membrane electrode assembly (130), and arranged at predetermined intervals at which the projections (150c) in one of the pair of separators (140) are offset to the projections (150c) in the other separator (140),

the relationship among a mean surface pressure P from one separator side, a pitch L between adjacent projections (150c) in the other separator (140), a thickness h of the supports, and bending strength $\sigma$ of the supports satisfies $L \leq (2h^2\sigma/XP)^{0.5}$, where

L denotes the pitch between adjacent projections (150c) in the other separator (140), which is a double of a distance in an in-plane direction between the center of gravity of an arbitrary projection (150cA) in one separator (140) and the center of gravity of the furthest projection (150cB) among the four projections (150c) closest to the arbitrary projection (150cA) the other separator (140).

14. The fuel cell (110) according to any one of claims 8 to 11, wherein an amount of offset between the projection (150a, 150b, 150c, 150d) in one of the pair of separators (140) and the projection in the other separator (140) is half of the pitch L between the adjacent projections (150a, 150b, 150c, 150d) in the separators (140).

15. The fuel cell (110) according to any one of claims 8 to 14, wherein the pair of separators (140) have the same pitch L between the adjacent projections (150a, 150b, 150c, 150d).

16. The fuel cell (110) according to claim 15, wherein the supports (160) are rolled or thermally treated.

17. The fuel cell (110) according to claim 15 or 16, wherein the supports (160) are formed from any of a metal net, an etched stainless steel sheet, a punching metal, an expanded metal, and a metallic nonwoven fabric.

18. The fuel cell (110) according to any one of claims 8 to 17, wherein the supports (160) are identical members in both of the catalyst layers (134, 136).

19. The fuel cell (110) according to any one of claims 8 to 18, wherein the projections (150a, 15b, 150c, 150d) have a width of 3 mm or more.

**Patentansprüche**

1. Brennstoffzelle (10), umfassend:

   - eine Membran-Elektrodeneinheit (30) mit einer Polymer-Elektrolyt-Membran (32) und Katalysatorschichten (34, 36), die darin angeordnet sind;
   - einen Anodenseparator (40), der auf einer Anodenseite der Membran-Elektrodeneinheit (30) angeordnet ist;
   - einen Kathodenseparator (45), der auf einer Kathodenseite der Membran-Elektrodeneinheit (30) angeordnet ist;
   - eine Mehrzahl von ersten Rippen (50, 50A), die parallel miteinander in einem Gasdurchgangsraum (42) zwischen der Membran-Elektrodeneinheit (30) und dem Anodenseparator (40) angeordnet sind;
   - eine Mehrzahl von zweiten Rippen (55, 55A), die parallel miteinander in einem Gasdurchgangsraum (47) zwischen der Membran-Elektrodeneinheit (30) und dem Kathodenseparator (45) angeordnet sind; und
   - eine Abstützung (60, 65, 65A), die aus einem metallischen porösen Grundmaterial hergestellt ist und zwischen der Membran-Elektrodeneinheit (30) und zumindest einer der ersten Rippen (50, 50A) oder zweiten Rippen (55, 55A) angeordnet ist,
   - wobei Kontaktflächen (52) der ersten Rippen (50, 50A), die mit der Membran-Elektrodeneinheit (30) oder der Abstützung (60, 65, 65A) in Kontakt sind, und Kontaktflächen (57) der zweiten Rippen (55, 55A), die mit der Membran-Elektrodeneinheit (30) oder der Abstützung (60, 65, 65A) in Kontakt sind, in einer Querschnittsansicht in die Richtung, die orthogonal zu einer Gasdurchgangsrichtung ist, voneinander beabstandet sind, und in einer Projektion in einer Stapelrichtung ohne Überlappung positioniert sind.

2. Brennstoffzelle (10) gemäß Anspruch 1, wobei

   - die Abstützung (60, 65, 65A) eine Biegesteifigkeit aufweist, die größer als die der Membran-Elektrodeneinheit (30) ist, und
   - die Abstützung (60, 65, 65A) zwischen sowohl der Membran-Elektrodeneinheit (30) und den ersten Rippen (50, 50A) als auch zwischen der Membran-Elektrodeneinheit (30) und den zweiten Rippen (55, 55A) angeordnet ist.

3. Brennstoffzelle (10) gemäß Anspruch 1 oder 2, wobei die ersten Rippen (50, 50A) und die zweiten Rippen (55, 55A) denselben Rippenabstand ($P_1$, $P_2$) aufweisen.

4. Brennstoffzelle (10) gemäß einem der Ansprüche 1 bis 3, wobei die ersten Rippen (50, 50A) und die zweiten Rippen (55, 55A) einen Rippenabstand ($P_1$, $P_2$) von (2 $\times$ (eine Länge der Abstützung in Breitenrichtung eines Gasdurchgangs) $\times$ (eine Dicke der Abstützung)$^2$ $\times$ (Biegefestigkeit der Abstützung) / (Stapellast für jede der ersten Rippen und zweiten Rippen) oder weniger, aber nicht Null, aufweisen.

5. Brennstoffzelle (10) gemäß einem der Ansprüche 2 bis 4, wobei die Abstützung (60, 65, 65A), die zwischen der Anodenseite der Membran-Elektrodeneinheit (30) und den ersten Rippen (50, 50A) angeordnet ist, dieselbe Dicke wie die Abstützung (60, 65, 65A) aufweist, die zwischen der Kathodenseite der Membran-Elektrodeneinheit (30) und den zweiten Rippen (55, 55A) angeordnet ist.

6. Brennstoffzelle (10) gemäß Anspruch 3, wobei die ersten Rippen (50, 50A) und die zweiten Rippen (55, 55A) angeordnet sind, so dass der Betrag eines relativen Abstands, der einen Abstand zwischen den Kontaktflächen (52) der ersten Rippen (50, 50A) und den Kontaktflächen (57) der zweiten Rippen (55, 55A) darstellt, die Hälfte des Rippenabstands ($P_1$, $P_2$) beträgt.

7. Brennstoffzelle (10) gemäß einem der Ansprüche 1 bis 6, die eine Zwischenschicht (35, 37) aufweist, die zwischen der Abstützung (60, 65, 65A) und der Membran-Elektrodeneinheit (30) angeordnet ist, wobei die Zwischenschicht (35, 37) eine Belastung verringert, die auf die Membran-Elektrodeneinheit (30) von der Abstützung (60, 65, 65A) hinzugefügt wird.

8. Brennstoffzelle (110), umfassend:

   - eine Membran-Elektrodeneinheit (130) mit einer Struktur, in der eine Polymer-Elektrolyt-Membran (132) zwischen einem Paar Katalysatorschichten (134, 136) gehalten wird;
   - ein Paar Separatoren (140) zum Bilden von Gasdurchgängen zwischen der Membran-Elektrodeneinheit (130) und den Separatoren (140); und
   - Abstützungen (160), die aus leitfähigen porösen Grundmaterialien hergestellt und jeweils auf den Flächen der Katalysatorschichten (134, 136) angeordnet sind,
   - wobei das Paar Separatoren (140) eine Mehrzahl von Vorsprüngen (150a, 150b, 150c, 150d) aufweist, wobei jeder gebogene Flächen in den Spitzen aufweist, die mit der Membran-Elektrodeneinheit (130) in Kontakt sind, und die Vorsprünge (150a, 150b, 150c, 150d) in vorbestimmten Intervallen angeordnet sind, an denen die Vorsprünge (150a, 150b, 150c, 150d) des einen Separators (140) gleichmäßig zu den Vorsprüngen (150a, 150b, 150c, 150d) des anderen Separators (140) versetzt sind, und
   - das Verhältnis zwischen einem mittleren Flächendruck P von der einen Separatorseite, einem Abstand L zwischen benachbarten Vorsprüngen in dem anderen Separator, einer Dicke h der Abstützungen und einer Biegefestigkeit $\sigma$ del Abstützungen $L \leq (2h^2 \sigma / P)^{0,5}$ erfüllt.

9. Brennstoffzelle (110), umfassend:

   - eine Membran-Elektrodeneinheit (130) mit einer Struktur, in der eine Polymer-Elektrolyt-Membran (132) zwischen einem Paar Katalysatorschichten (134, 136) gehalten wird;
   - ein Paar Separatoren (140) zum Bilden von Gasdurchgängen zwischen der Membran-Elektrodeneinheit (130) und den Separatoren (140); und
   - Abstützungen (160), die aus leitfähigen porösen Grundmaterialien hergestellt und jeweils auf den Flächen der Katalysatorschichten (134, 136) angeordnet sind,
   - wobei das Paar Separatoren (140) eine Mehrzahl von Vorsprüngen (150a, 150b, 150c, 150d) mit ebenen Flächen in den Spitzen aufweist, die mit der Membran-Elektrodeneinheit (130) in Kontakt sind, wobei die Vorsprünge (150b) in vorbestimmten Intervallen angeordnet sind, an denen die Vorsprünge (150a, 150b, 150c, 150d) von einem des Paars von Separatoren (140) gleichmäßig zu den Vorsprüngen (150 a, 150 b, 150 c, 150 d) in dem anderen Separator (140) versetzt sind, und
   - das Verhältnis zwischen einem mittleren Flächendruck P von der einen Separatorseite, einem Abstand L zwischen benachbarten Vorsprüngen in dem anderen Separator, einer Breite Wr der Vorsprünge, einer Dicke h der Abstützungen und einer Biegefestigkeit $\sigma$ der Abstützungen $L - Wr \leq (2h^2 \sigma / P)^{0,5}$ erfüllt.

10. Brennstoffzelle (110) gemäß Anspruch 8 oder 9, wobei die Vorsprünge (150a, 150b, 150c, 150d) im Paar von Separatoren (140) wie Rippen ausgebildet sind, die parallel miteinander angeordnet sind.

11. Brennstoffzelle (110) gemäß Anspruch 8 oder 9, wobei die Vorsprünge (150a, 150b, 50c, 150d) im Paar von Separatoren (140) wie Punkte ausgebildet sind.

12. Brennstoffzelle (110), umfassend:

   - eine Membran-Elektrodeneinheit (130) mit einer Struktur, in der eine Polymer-Elektrolyt-Membran (132) zwischen einem Paar Katalysatorschichten (134, 136) gehalten wird;
   - ein Paar Separatoren (140) zum Bilden von Gasdurchgängen zwischen der Membran-Elektrodeneinheit (130) und den Separatoren (140); und

- Abstützungen (160), die aus leitfähigen porösen Grundmaterialien hergestellt und jeweils auf den Flächen der Katalysatorschichten (134, 136) angeordnet sind,
- wobei das Paar Separatoren eine Mehrzahl von rippenförmigen Vorsprüngen (150a) mit gebogenen Flächen in den Spitzen aufweist, die mit der Membran-Elektrodeneinheit (130) in Kontakt sind, und parallel miteinander in vorbestimmten Intervallen angeordnet sind, an denen die Vorsprünge (150a) in einem des Paars von Separatoren (140) zu den Vorsprüngen (150a) in dem anderen Separator (140) versetzt sind,
- wobei das Verhältnis zwischen einem mittleren Flächendruck P von der einen Separatorseite, einem Abstand L zwischen benachbarten Vorsprüngen in dem anderen Separator, einer Dicke h der Abstützungen und einer Biegefestigkeit $\sigma$ der Abstützungen $L \leq (2h^2 \sigma / XP)^{0,5}$ erfüllt,
- wobei X als $X = 2L_1 / (L_1 + L_2)$ definiert ist, in dem $L_1$ einen Abstand zwischen einem Vorsprung in dem einen Separator (140) und einem der benachbarten Vorsprünge in dem anderen Separator (140) und $L_2$ einen Abstand zwischen dem Vorsprung in dem einen Separator (140) und dem anderen benachbarten Vorsprung in dem anderen Separator (140) bezeichnet.

13. Brennstoffzelle (110), umfassend:

- eine Membran-Elektrodeneinheit (130) mit einer Struktur, in der eine Polymer-Elektrolyt-Membran (132) zwischen einem Paar Katalysatorschichten (134, 136) gehalten wird;
- ein Paar Separatoren (140) zum Bilden von Gasdurchgängen zwischen der Membran-Elektrodeneinheit (130) und den Separatoren (140); und
- Abstützungen (160), die aus leitfähigen porösen Grundmaterialien hergestellt und jeweils auf den Flächen der Katalysatorschichten (134, 136) angeordnet sind,
- wobei das Paar von Separatoren (140) eine Mehrzahl von punktförmigen Vorsprüngen (150c) mit gebogenen Flächen in den Spitzen aufweist, die mit der Membran-Elektrodeneinheit (130) in Kontakt sind, und in vorbestimmten Intervallen angeordnet sind, an denen die Vorsprünge (150c) in einem des Paars von Separatoren (140) zu den Vorsprüngen (150c) in dem anderen Separator (140) versetzt sind,
- wobei das Verhältnis zwischen einem mittleren Flächendruck P von der einen Separatorseite, einem Abstand L zwischen benachbarten Vorsprüngen (150c) in dem anderen Separator (140), einer Dicke h der Abstützungen und einer Biegefestigkeit $\sigma$ der Abstützungen $L \leq (2h^2 \sigma / XP)^{0,5}$ erfüllt, wobei
- L den Abstand zwischen benachbarten Vorsprüngen (150c) in dem anderen Separator (140) bezeichnet, der doppelt so groß wie ein Abstand in einer Ebenenrichtung zwischen dem Schwerpunkt eines beliebigen Vorsprungs (150cA) in dem einen Separator (140) und dem Schwerpunkt des am Weitesten entfernten Vorsprungs (150cB) unter den vier Vorsprüngen (150c), die am Nächsten zum beliebigen Vorsprung (150cA) sind, in dem anderen Separator (140) ist.

14. Brennstoffzelle (110) gemäß einem der Ansprüche 8 bis 11, wobei ein Betrag eines Versatzes zwischen dem Vorsprung (150a, 150b, 150c, 150d) in einem des Paars von Separatoren (140) und dem Vorsprung in dem anderen Separator (140) die Hälfte des Abstands L zwischen den benachbarten Vorsprüngen (150a, 150b, 150c, 150d) in den Separatoren (140) ist.

15. Brennstoffzelle (110) gemäß einem der Ansprüche 8 bis 14, wobei das Paar von Separatoren (140) denselben Abstand L zwischen den benachbarten Vorsprüngen (150a, 150b, 150c, 150d) aufweist.

16. Brennstoffzelle (110) gemäß Anspruch 15, wobei die Abstützungen (160) gewalzt oder thermisch behandelt sind.

17. Brennstoffzelle (110) gemäß Anspruch 15 oder 16, wobei die Abstützungen (160) aus einem Metallgitter, einem geätzten Edelstahlblech, einem gestanzten Blech, einem Streckmetall oder einem metallischen Fließstoff ausgebildet sind.

18. Brennstoffzelle (110) gemäß einem der Ansprüche 8 bis 17, wobei die Abstützungen (160) identische Elemente in beiden Katalysatorschichten (134, 136) sind.

19. Brennstoffzelle (110) gemäß einem der Ansprüche 8 bis 18, wobei die Vorsprünge (150a, 150b, 150c, 150d) eine Breite von 3mm oder mehr aufweisen.

**Revendications**

1. Pile à combustible (10) comprenant :

   un ensemble électrodes-membrane (30) ayant une membrane électrolytique polymère (32) et des couches de catalyseur (34, 36) disposées dans celle-ci ;
   un séparateur anodique (40) disposé sur un côté anode de l'ensemble électrodes-membrane (30) ;
   un séparateur cathodique (45) disposé sur un côté cathode de l'ensemble électrodes-membrane (30) ;
   une pluralité de premières nervures (50, 50A) disposées en parallèle les unes aux autres dans un espace de passage de gaz (42) entre l'ensemble électrodes-membrane (30) et le séparateur anodique (40) ;
   une pluralité de deuxièmes nervures (55, 55a) disposées en parallèle les unes aux autres dans un espace de passage de gaz (47) entre l'ensemble électrodes-membrane (30) et le séparateur cathodique (45) ; et
   un support (60, 65, 65A) réalisé en un matériau de base métallique poreux et disposé entre l'ensemble électrodes-membrane (30) et au moins l'une des premières nervures (50, 50A) et des deuxièmes nervures (55, 55A),
   dans laquelle des surfaces de contact (52) des premières nervures (50, 50A) en contact avec l'ensemble électrodes-membrane (30) ou avec le support (60, 65, 65A) et des surfaces de contact (57) des deuxièmes nervures (55, 55A) en contact avec l'ensemble électrodes-membrane (30) ou avec le support (60, 65, 65A) sont décalées les unes des autres en coupe transversale dans la direction orthogonale à une direction de passage de gaz et positionnées sans se chevaucher les unes avec les autres dans une saillie dans une direction d'empilement.

2. Pile à combustible (10) selon la revendication 1, dans laquelle
   le support (60, 65, 65A) a une résistance à la flexion supérieure à celle de l'ensemble électrodes-membrane (30), et
   le support (60, 65, 65A) est disposé à la fois entre l'ensemble électrodes-membrane (30) et les premières nervures (50, 50A) et entre l'ensemble électrodes-membrane (30) et les deuxièmes nervures (55, 55A).

3. Pile à combustible (10) selon la revendication 1 ou 2, dans laquelle les premières nervures (50, 50A) et les deuxièmes nervures (55, 55A) ont le même pas de nervure ($P_1$, $P_2$).

4. Pile à combustible (10) selon l'une quelconque des revendications 1 à 3, dans laquelle les premières nervures (50, 50A) et les deuxièmes nervures (55, 55A) ont un pas de nervure ($P_1$, $P_2$) de ($2 \times$ (une longueur du support dans une direction de largeur de passage de gaz) $\times$ (une épaisseur du support)$^2$ $\sigma$ (la résistance à la flexion du support)) / (une charge d'empilement pour chacune des premières nervures et des deuxièmes nervures) ou moins, mais différent de 0.

5. Pile à combustible (10) selon l'une quelconque des revendications 2 à 4, dans laquelle le support (60, 65, 65A) disposé entre le côté anode de l'ensemble électrodes-membrane (30) et les premières nervures (50, 50A) a la même épaisseur que le support (60, 65, 65A) disposé entre le côté cathode de l'ensemble électrodes-membrane (30) et les deuxièmes nervures (55, 55A).

6. Pile à combustible (10) selon la revendication 3, dans laquelle les premières nervures (50, 50A) et les deuxièmes nervures (55, 55A) sont disposées de sorte que la quantité d'écart relatif représentant une distance entre les surfaces de contact (52) des premières nervures (50, 50A) et les surfaces de contact (57) des deuxièmes nervures (55, 55A) soit égale à la moitié du pas de nervure ($P_1$, $P_2$).

7. Pile à combustible (10) selon l'une quelconque des revendications 1 à 6, comprenant une couche intermédiaire (35, 37) disposée entre le support (60, 65, 65A) et l'ensemble électrodes-membrane (30),
   dans laquelle la couche intermédiaire (35, 37) atténue une contrainte ajoutée à l'ensemble électrodes-membrane (30) à partir du support (60, 65, 65A).

8. Pile à combustible (110) comprenant :

   un ensemble électrodes-membrane (130) ayant une structure dans laquelle une membrane électrolytique polymère (132) est maintenue entre une paire de couches de catalyseur (134, 136) ;
   une paire de séparateurs (140) pour définir des passages de gaz entre l'ensemble électrodes-membrane (130) et les séparateurs (140) ; et
   des supports (160) réalisés en matériaux de base conducteurs poreux et disposés, respectivement, sur des surfaces des couches de catalyseur (134, 136),

dans laquelle la paire de séparateurs (140) a une pluralité de saillies (150a, 150b, 150c, 150d) ayant chacune des surfaces incurvées aux sommets en contact avec l'ensemble électrodes-membrane (130), et agencées à des intervalles prédéterminés auxquels les saillies (150a , 150b 150c, 150d) dans l'un des séparateurs (140) sont uniformément décalées par rapport aux saillies (150a, 150b, 150c, 150d) dans l'autre séparateur (140), et la relation entre une pression moyenne de surface P du côté d'un séparateur, un pas L entre des saillies adjacentes dans l'autre séparateur, une épaisseur h des supports, et une résistance à la flexion $\sigma$ des supports satisfait $L \leq (2h^2 \sigma /P)^{0.5}$.

**9.** Pile à combustible (110) comprenant :

un ensemble électrodes-membrane (130) ayant une structure dans laquelle une membrane électrolytique polymère (132) est maintenue entre une paire de couches de catalyseur (134, 136) ;
une paire de séparateurs (140) pour définir des passages de gaz entre l'ensemble électrodes-membrane (130) et les séparateurs (140) ; et
des supports (160) réalisés en matériaux de base conducteurs poreux et disposés, respectivement, sur des surfaces des couches de catalyseur (134, 136),
dans laquelle la paire de séparateurs (140) a une pluralité de saillies (150a, 150b, 150c, 150d) ayant des surfaces plates aux sommets en contact avec l'ensemble électrodes-membrane (130), les saillies (150b) étant agencées à des intervalles prédéterminés auxquels les saillies (150a, 150b, 150c, 150d) de l'un de la paire de séparateurs (140) sont uniformément décalées par rapport aux saillies (150a, 150b, 150c, 150d) dans l'autre séparateur (140), et
la relation entre une pression moyenne de surface P du côté d'un séparateur, un pas L entre des saillies adjacentes dans l'autre séparateur, une épaisseur Wr des saillies, une épaisseur h des supports, et une résistance à la flexion $\sigma$ des supports satisfait $L - Wr \leq (2h^2 \sigma /P)^{0.5}$.

**10.** Pile à combustible (110) selon la revendication 8 ou 9, dans laquelle les saillies (150a, 150b, 150c, 150d) dans la paire de séparateurs (140) sont en forme de nervures disposées en parallèle les unes aux autres.

**11.** Pile à combustible (110) selon la revendication 8 ou 9, dans laquelle les saillies (150a, 150b, 150c, 150d) dans la paire de séparateurs (140) sont en forme de points.

**12.** Pile à combustible (110) comprenant :

un ensemble électrodes-membrane (130) ayant une structure dans laquelle une membrane électrolytique polymère (132) est maintenue entre une paire de couches de catalyseur (134, 136) ;
une paire de séparateurs (140) pour définir des passages de gaz entre l'ensemble électrodes-membrane (130) et les séparateurs (140) ; et
des supports (160) réalisés en matériaux de base conducteurs poreux et disposés, respectivement, sur des surfaces des couches de catalyseur (134, 136),
dans laquelle la paire de séparateurs a une pluralité de saillies en forme de nervure (150a) ayant des surfaces incurvées aux sommets en contact avec l'ensemble électrodes-membrane (130), et disposées en parallèle les unes aux autres à des intervalles prédéterminés auxquels les saillies (150a) dans l'un de la paire de séparateurs (140) sont décalées par rapport aux saillies (150a) dans l'autre séparateur (140),
la relation entre une pression moyenne de surface P du côté d'un séparateur, un pas L entre des saillies adjacentes dans l'autre séparateur, une épaisseur h des supports, et une résistance à la flexion $\sigma$ des supports satisfait $L \leq (2h^2\sigma /XP)^{0.5}$,
où X est défini par $X = 2L_1 / (L_1 + L_2)$ où $L_1$ représente une distance entre une saillie quelconque dans un séparateur (140) et l'une des saillies adjacentes dans l'autre séparateur (140) et $L_2$ représente une distance entre la saillie dans un séparateur (140) et l'autre saillie adjacente dans l'autre séparateur (140).

**13.** Pile à combustible (110) comprenant :

un ensemble électrodes-membrane (130) ayant une structure dans laquelle une membrane électrolytique polymère (132) est maintenue entre une paire de couches de catalyseur (134, 136) ;
une paire de séparateurs (140) pour définir des passages de gaz entre l'ensemble électrodes-membrane (130) et les séparateurs (140) ; et
des supports (160) réalisés en matériaux de base conducteurs poreux et disposés, respectivement, sur des surfaces des couches de catalyseur (134, 136),

dans laquelle la paire de séparateurs (140) ont une pluralité de saillies en forme de point (150c) ayant des surfaces incurvées aux sommets en contact avec l'ensemble électrodes-membrane (130), et agencées à des intervalles prédéterminés auxquels les saillies (150c) dans l'un de la paire de séparateurs (140) sont décalées par rapport aux saillies (150c) dans l'autre séparateur (140),

la relation entre la pression moyenne de surface P du côté d'un séparateur, un pas L entre des saillies adjacentes (150c) dans l'autre séparateur (140), une épaisseur h des supports, et une résistance à la flexion σ des supports satisfait $L \leq (2h^2 \sigma /XP)^{0.5}$, où

L représente le pas entre des saillies adjacentes (150c) dans l'autre séparateur (140), qui est un double d'une distance dans une direction dans le plan entre le centre de gravité d'une saillie arbitraire (150cA) dans un séparateur (140) et le centre de gravité de la saillie la plus éloignée (150cB) parmi les quatre saillies (150c) les plus proches de la saillie arbitraire (150cA) dans l'autre séparateur (140).

14. Pile à combustible (110) selon l'une quelconque des revendications 8 à 11, dans laquelle une quantité de décalage entre la saillie (150a, 150b, 150c, 150d) dans l'un de la paire de séparateurs (140) et la saillie dans l'autre séparateur (140) est la moitié du pas L entre les saillies adjacentes (150a, 150b, 150c, 150d) dans les séparateurs (140).

15. Pile à combustible (110) selon l'une quelconque des revendications 8 à 14, dans laquelle la paire de séparateurs (140) ont le même pas L entre les saillies adjacentes (150a, 150b, 150c, 150d).

16. Pile à combustible (110) selon la revendication 15, dans laquelle les supports (160) sont enroulés ou traités thermiquement.

17. Pile à combustible (110) selon la revendication 15 ou 16, dans laquelle les supports (160) sont formés à partir d'un élément quelconque parmi un treillis métallique, une tôle d'acier inoxydable gravée, un métal de poinçonnage, un métal déployé, et un tissu métallique non-tissé.

18. Pile à combustible (110) selon l'une quelconque des revendications 8 à 17, dans laquelle les supports (160) sont des éléments identiques dans les deux couches de catalyseur (134, 136).

19. Pile à combustible (110) selon l'une quelconque des revendications 8 à 18, dans laquelle les saillies (150a, 15b, 150c, 150d) ont une largeur supérieure ou égale à 3 mm.

[FIG.1]

[FIG.2]

[FIG.3]

60(65)

[FIG.4]

[FIG.5]

[FIG.6]

[FIG.7]

[FIG.8]

[FIG.9]

[FIG.10]

[FIG.11]

[FIG.12]

[FIG.13]

[FIG.14]

[FIG.15]

[FIG.16]

(A)

140

150c

L

150c

(B)

150c    140

150c    L

[FIG.17]

P

160    150d    130    110

h

150d    160    150d

Wr    L

36

[FIG.18]

(A) 140

150d

(L-Wr)

150d

(B)

150d 140

(L-Wr) 150d

[FIG.19]

P

150a

160 130 110

h

160

L1 L2

150a L 150a

[FIG.20]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000315507 A
- JP 2006310104 A
- JP 2012058616 A
- JP 2012106443 A